# EUROPEAN PATENT SPECIFICATION

(11) **EP 3 896 587 B1**
(45) Date of publication and mention of the grant of the patent: **11.09.2024**
(21) Application number: 19910064.5
(22) Date of filing: 15.03.2019
(51) Int. Cl.: H04W 12/065, H04W 12/68, H04W 12/63, H04W 12/61, H04W 12/33, H04W 12/67, H04L 9/40, H04L 9/00, G06F 21/31, G06F 21/45, G06F 21/64, H04W 4/38, H04L 67/50, G06N 3/02, G06N 3/04, G06N 3/084

(54) **ELECTRONIC DEVICE FOR PERFORMING USER AUTHENTICATION AND OPERATION METHOD THEREFOR**
ELEKTRONISCHE VORRICHTUNG ZUR DURCHFÜHRUNG EINER BENUTZERAUTHENTIFIZIERUNG UND BETRIEBSVERFAHREN DAFÜR
DISPOSITIF ÉLECTRONIQUE DESTINÉ À EFFECTUER UNE AUTHENTIFICATION D'UTILISATEUR ET PROCÉDÉ D'OPÉRATION ASSOCIÉ

(30) Priority: 18.01.2019 KR 20190006925
(43) Date of publication of application: 20.10.2021
(73) Proprietor: Samsung Electronics Co., Ltd., Suwon-si, Gyeonggi-do 16677 (KR)
(72) Inventor: POPOV, Oleksandr, Gyeonggi-do 16677 (KR); BILIAVSKYI, Mykyta, Gyeonggi-do 16677 (KR); POPOV, Artem, Gyeonggi-do 16677 (KR); BRYNZA, Volodymyr, Gyeonggi-do 16677 (KR); OLIYNYK, Andriy, Gyeonggi-do 16677 (KR)
(74) Representative: Appleyard Lees IP LLP
(86) International application number: PCT/KR2019/003025
(87) International publication number: WO 2020/149454

(56) References cited:
- WO-A1-2018/114676
- CN-A- 108 241 970
- JP-A- 2011 059 837
- JP-A- 2013 020 304
- US-A1- 2016 042 164
- US-A1- 2016 261 690
- US-A1- 2019 007 424
- US-B1- 9 185 095

## Description

### TECHNICAL FIELD

The disclosure relates to an electronic device that authenticates a user, and an operation method thereof. The disclosure also relates to an artificial intelligence (Al) system that utilizes a machine learning algorithm such as deep learning, etc., and an application of the Al system.

### BACKGROUND ART

An artificial intelligence (Al) system is a computer system with human level intelligence. Unlike an existing rule-based smart system, the Al system is a system that trains itself autonomously, makes decisions, and becomes increasingly smarter. The more the AI system is used, the more the recognition rate of the Al system may improve and the Al system may more accurately understand a user preference. Thus, existing rule-based smart systems have been gradually replaced by deep learning based Al systems.

Al technology refers to machine learning (deep learning) and element technologies that utilize the machine learning.

Machine learning is an algorithm technology that classifies/learns the features of input data autonomously. Element technology is a technology that utilizes a machine learning algorithm such as deep learning and includes technical fields such as linguistic understanding, visual comprehension, reasoning/prediction, knowledge representation, and motion control.

Al technology is applied to various fields as follows. Linguistic understanding is a technology to identify and apply/process human language/characters and includes natural language processing, machine translation, dialogue systems, query response, speech recognition/synthesis, and the like. Visual comprehension is a technology to recognize and process objects like human vision and includes object recognition, object tracking, image search, human recognition, scene understanding, spatial understanding, image enhancement, and the like. Reasoning prediction is a technology to acquire and logically infer and predict information and includes knowledge/probability based reasoning, optimization prediction, preference based planning, recommendation, and the like. Knowledge representation is a technology to automate human experience information into knowledge data and includes knowledge building (data generation/classification), knowledge management (data utilization), and the like. Motion control is a technology to control autonomous traveling of a vehicle and motion of a robot, and includes motion control (navigation, collision avoidance, and traveling), operation control (behavior control), and the like.

Various services, applications, etc. provided by an electronic device may require authentication of a user who wants to access the services and applications. For example, various types of service providers such as financial service providers, credit card service providers, medical service providers, and social network service providers may request verification that a user of an electronic device is an authentic user.

User authentication may be performed based on information collected or input from the user. For example, user authentication may be performed based on various types of user information such as ID and password information, fingerprint recognition information, face recognition information, and pattern input information input from the user.

When the user owns various electronic devices and uses several devices at the same time, information about the user may be collected by each electronic device. Accordingly, there is a need for a method of performing user authentication highly effectively and accurately based on various types of behavior data collected by various electronic devices.
US2016042164 describes a mobile communications device includes a plurality of first input devices capable of passively collecting input data, a second input device(s) capable of collecting response data based upon a challenge, and a processor capable of determining a level of assurance (LOA) that possession of the mobile communications device has not changed based upon a statistical behavioral model and the passively received input data, and comparing the LOA with a security threshold. When the LOA is above the security threshold, the processor may be capable of performing a given mobile device operation without requiring response data from the second input device(s). When the LOA falls below the security threshold, the processor may be capable of generating the challenge, performing the given mobile device operation responsive to valid response data, and adding recent input data to the statistical behavioral model responsive to receipt of the valid response data.
WO2018114676 describes a method for behavior-based authentication of a current user of a mobile, portable communication system, which has at least one sensor for detecting gross motor measurement data, a gross motor classification module, a processor, and an internal memory. Furthermore, a user is registered in the mobile, portable communication system. The sensor is designed to detect the gross motor measurement data of a gross motor movement of the current user of the mobile, portable communication system and the gross motor classification module is trained to detect a generic gross motor movement pattern by means of training data sets of a user cohort. In addition, the gross motor classification module implements a machine learning method. The gross motor classification module is executed by the processor of the mobile, portable communication system.
US9185095 describes a method includes observing behavioral characteristics of user interactions during a current session with the user through one of a plurality of channels. Variations between the behavioral characteristics of the user interactions observed during the current session and a behavioral profile previously developed based on prior usage patterns of the user through the plurality of channels are identified, in real-time or near real-time. For the user to proceed in the session, a challenge level is implemented based on the variations between the behavioral characteristics and the behavioral profile. US2019007424 describes a method, system and computer-usable medium for generating a cyber behavior profile, comprising: monitoring user interactions between a user and an information handling system; converting the user interactions and the information about the user into electronic information representing the user interactions; generating a unique cyber behavior profile based upon the electronic information representing the user interactions and the information about the user; and, storing information relating to the unique cyber behavior profile in a behavior blockchain.

### DESCRIPTION OF EMBODIMENTS

### SOLUTION TO PROBLEM

The invention is defined by the appended claims. Provided is an electronic device that authenticates a user and an operation method thereof.

Provided is a computer program product including a non-transitory computer-readable recording medium having recorded thereon a program for executing the method on a computer. The technical solution to be solved is not limited to the technical problems as described above, and other technical problems may exist.

### ADVANTAGEOUS EFFECTS OF DISCLOSURE

According to an embodiment of the disclosure, user authentication with high reliability and security may be performed based on behavior data of a user collected by at least one electronic device.

### BRIEF DESCRIPTION OF DRAWINGS

FIG. 1 is a diagram illustrating a system that authenticates a user, according to an embodiment of the disclosure.
FIG. 2 is a diagram illustrating a blockchain including a plurality of nodes authenticating a user, according to an embodiment of the disclosure.
FIG. 3 is a diagram illustrating operations of a blockchain and a plurality of electronic devices for performing user authentication, according to an embodiment of the disclosure.
FIG. 4 is a block diagram illustrating an internal configuration of an electronic device according to an embodiment of the disclosure.
FIG. 5 is a block diagram illustrating an internal configuration of an electronic device according to an embodiment of the disclosure.
FIG. 6 is a flowchart illustrating a method of performing user authentication according to an embodiment of the disclosure.
FIG. 7 is a flowchart illustrating a method, performed by an electronic device, of submitting behavior data to the blockchain, according to an embodiment of the disclosure.
FIG. 8 is a flowchart illustrating a method of performing user authentication in two steps, according to an embodiment of the disclosure.
FIG. 9 is a flowchart illustrating a method of performing second authentication according to an embodiment of the disclosure.
FIG. 10 is a flowchart illustrating a method of performing second authentication according to an embodiment of the disclosure.
FIG. 11 is a diagram illustrating an example of performing user authentication based on behavior data, according to an embodiment of the disclosure.
FIG. 12 is a diagram illustrating an example in which an electronic device operates as a node of a blockchain through a node participating in the blockchain, according to an embodiment of the disclosure.
FIG. 13 is a block diagram illustrating structures of a block and a blockchain, according to an embodiment of the disclosure.
FIG. 14 is a diagram illustrating an embodiment utilizing user authentication according to an embodiment of the disclosure.
FIG. 15 is a flowchart illustrating a method, performed by a plurality of electronic devices, of performing user authentication according to an embodiment of the disclosure.
FIG. 16 is a diagram illustrating an example of performing user authentication according to an embodiment of the disclosure.
FIG. 17 is a block diagram of a processor according to some embodiments of the disclosure.
FIG. 18 is a block diagram of a data learner according to some embodiments of the disclosure.
FIG. 19 is a block diagram of a data determiner according to some embodiments of the disclosure.
FIG. 20 is a diagram illustrating an example in which an electronic device and a server learn and determine data by interacting with each other according to some embodiments of the disclosure.

### BEST MODE

According to an embodiment of the disclosure, a method, performed by an electronic device, of authenticating a user includes obtaining an authentication model; obtaining behavior data with respect to the user; authenticating the obtained behavior data using the obtained authentication model; and based on results of the authenticating, submitting the authenticated behavior data to a blockchain, wherein the authentication model is a model trained based on at least one piece of behavior data with respect to the user enrolled in the blockchain.

According to another embodiment of the disclosure, an electronic device that authenticates a user includes a memory storing an authentication model; at least one processor configured to obtain behavior data with respect to the user and authenticate the obtained behavior data using the obtained authentication model; and a communicator configured to, based on results of the authenticating, submit the authenticated behavior data to a blockchain, wherein the authentication model is a model trained based on at least one piece of behavior data with respect to the user enrolled in the blockchain.

According to another embodiment of the disclosure, a computer program product including a non-transitory computer-readable recording medium having recorded thereon a program for executing the method on a computer is provided.

### MODE OF DISCLOSURE

Embodiments of the disclosure will be described in detail in order to fully convey the scope of the disclosure and enable one of ordinary skill in the art to embody and practice the disclosure. The disclosure may, however, be embodied in many different forms and should not be construed as being limited to the embodiments set forth herein. Also, parts in the drawings unrelated to the detailed description are omitted to ensure clarity of the disclosure. Like reference numerals in the drawings denote like elements.

Throughout the specification, it will be understood that when an element is referred to as being "connected" to another element, it may be "directly connected" to the other element or "electrically connected" to the other element with intervening elements therebetween. It will be further understood that when a part "includes" or "comprises" an element, unless otherwise defined, the part may further include other elements, not excluding the other elements.

In the present specification, "blockchain" may refer to a distributed Peer to Peer (P2P) system of a ledger that utilizes a software element composed of algorithms in which blocks connected in order negotiate transaction information using encryption and security techniques so as to secure and maintain integrity. Here, the distributed P2P system may be a special form of a distributed system. In addition, in the P2P system, all nodes of the network may provide resources (processing power, storage space, data or network bandwidth, etc.) to each other without coordination of a central node. In addition, a "blockchain" may mean a distributed ledger technology that nodes in a network jointly record and manage by distributing the ledger recording transaction information to a P2P network rather than a central server of a specific institution.

In the present specification, a "node" may mean a component within a network of blockchain. For example, the node may be a special-purpose computer, a general-purpose computer, a supercomputer, a mainframe computer, a personal computer, a smartphone, and a tablet PC, etc., but is not limited thereto.

Hereinafter, the disclosure will be described in detail by explaining embodiments of the disclosure with reference to the attached drawings.

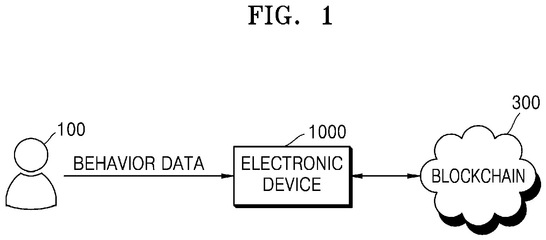

FIG. 1 is a diagram illustrating a system that authenticates a user according to an embodiment of the disclosure.

Referring to FIG. 1, the system that authenticates the user according to an embodiment of the disclosure may include an electronic device 1000 and a blockchain 300.

The electronic device 1000 according to an embodiment of the disclosure is a device that collects behavior data of a user 100 and authenticates the user 100, and may be implemented in various forms.

For example, the electronic device 1000 described in the present specification may include a smart TV, a set-top box, a mobile phone, a tablet PC, a digital camera, a laptop computer, a desktop, an e-book terminal, a digital broadcasting terminal, a personal digital assistant (PDA), a portable multimedia player (PMP), a navigation, an MP3 player, a wearable device, etc., but is not limited thereto.

In addition, the electronic device 1000 described in the present specification may be a wearable device that may be worn by a user. The wearable device may include at least one of an accessory-type device (e.g., a watch, a ring, a cuff band, an ankle band, a necklace, spectacles, and a contact lens), a head-mounted-device (HMD), a textile or garment-integrated device (e.g. electronic garments), a body attachment device (e.g., a skin pad), or a bioimplantable device (e.g., implantable circuit) but is not limited thereto. Hereinafter, for convenience of explanation, a case where the electronic device 1000 is a smart phone will be described as an example.

According to an embodiment of the disclosure, the electronic device 1000 may collect behavior data from the user and perform user authentication. According to an embodiment of the disclosure, the electronic device 1000 may perform authentication on the collected behavior data to authenticate that the user providing the behavior data is an authentic user. For example, the electronic device 1000 may determine whether the user providing the behavior data is the authentic user according to a degree to which a pattern of the collected behavior data matches a pattern of previously learned behavior data.

The electronic device 1000 according to an embodiment of the disclosure may collect various types of behavior data from the user 100. For example, the electronic device 1000 may collect, as the behavior data of the user 100, information input by the user such as a button input, a fingerprint recognition, a face recognition, a pattern recognition, a password input, a touch input on a touch screen, a voice input, etc., and biometric information, motion information, location information, etc. of the user sensed by a sensor. The information input by the user may include information directly input by the user for user authentication. In addition, the behavior data may further include information about characteristics (e.g., a type) of the electronic device 1000 by which the behavior data is collected, information about a time and a location at which the behavior data is collected, etc. The electronic device 1000 is not limited to the above-described example, and may collect various types of behavior data related to the user 100.

User authentication according to an embodiment of the disclosure may include continuous authentication in which authentication is continuously performed during one session.

Continuous authentication refers to an authentication technology in which authentication is continuously performed based on behavior data collected from a user, instead of performing one-time authentication through a direct input of a user for authentication, such as ID and password input. According to continuous authentication, authentication may be continuously performed through behavior data that may be collected by the electronic device 1000 without user recognition. Therefore, according to continuous authentication, even though information for authentication is not directly input by the user, a high level of security may be maintained.

According to an embodiment of the disclosure, user authentication may be performed in two stages of first authentication using an authentication method using an ID and a password, and second authentication using the above-described continuous authentication method. For example, after first authentication is performed, a session for second authentication is established, and continuous authentication on the user may be performed through second authentication until the set session is terminated. According to an embodiment of the disclosure, when a preset time elapses or second authentication repeatedly fails, the session may be terminated. After the session is terminated, first authentication may be performed again. The user authentication is not limited to the above-described example, and may be performed in various ways, including continuous authentication.

According to continuous authentication according to an embodiment of the disclosure, authentication may be performed by comparing the pattern of the behavior data collected from the user with the previously learned behavior pattern. For example, as the pattern of the collected behavior data matches the previously learned behavior pattern, a higher confidence value may be determined. When the determined confidence value is greater than or equal to a reference value, it may be determined that the user of the behavior data is an authentic user, and the behavior data may be determined as authenticated behavior data according to an embodiment of the disclosure.

In addition, the behavior data having a confidence value equal to or greater than the reference value may be submitted to the blockchain 300. The behavior data submitted to the blockchain 300 may be added to the blockchain 300 as a new block because a consensus is achieved between nodes participating in the blockchain 300, and may be enrolled in the blockchain 300. According to an embodiment of the disclosure, at least one node participating in the blockchain 300 may perform verification on the behavior data submitted to the blockchain 300 so as to determine whether to enroll the behavior data submitted to the blockchain 300 in the blockchain 300. According to results of verification, the at least one node may agree that the behavior data is enrolled in the blockchain 300.

The previously learned behavior pattern according to an embodiment of the disclosure may be an authentication model for authenticating the behavior data. For example, the electronic device 1000 may obtain a confidence value of the behavior data based on the authentication model to authenticate the user.

The authentication model according to an embodiment of the disclosure may be trained based on authenticated behavior data according to results of performing user authentication. In addition, the authentication model according to an embodiment of the disclosure may be trained based on the behavior data enrolled in the blockchain 300.

The behavior data enrolled in the blockchain 300 may include behavior data authenticated by the electronic device 1000 as well as behavior data authenticated by another electronic device according to an embodiment of the disclosure. According to an embodiment of the disclosure, the behavior data collected by another electronic device may be behavior data authenticated with respect to the same user as the user of the behavior data collected by the electronic device 1000. For example, the behavior data enrolled in the blockchain 300 may include authenticated behavior data among the behavior data collected by another electronic device owned by the same user as the user of the electronic device 1000.

The behavior data according to an embodiment of the disclosure may be enrolled in the blockchain 300, instead of being centrally stored in a server or an external device, and may be shared among a plurality of devices participating in the blockchain 300. Accordingly, according to an embodiment of the disclosure, compared to a case where data is distributed in a server-client manner, security may be further enhanced, and costs may be reduced because it is unnecessary to manage the server. In addition, according to an embodiment of the disclosure, data is distributed to and stored in the plurality of devices participating in the blockchain 300, which may prevent a distributed denial of service (a DDoS) attack which is a hacking method that intensively attacks the server. In addition, a distributed ledger is stored in each device owing to the nature of technology of the blockchain 300, which guarantees transparency of data, and thus a higher reliability than that of the server-client method may be secured.

According to an embodiment of the disclosure, at least one electronic device 1000 capable of collecting behavior data of the same user may participate in the same blockchain 300 as a node. The authentication model used in the at least one electronic device 1000 may be trained based on the behavior data enrolled in the blockchain 300. When each electronic device 1000 participates in the same blockchain 300, behavior data used to train the authentication model of each electronic device 1000 may be identical to each other. According to an embodiment of the disclosure, because training of the authentication model is performed separately by each electronic device 1000, the authentication model used by each electronic device 1000 may be different from each other.

Each node participating in the blockchain 300 may determine whether the behavior data submitted to the blockchain 300 is valid. For example, each node participating in the blockchain 300 may determine whether the behavior data contradicts other given behavior data enrolled in the blockchain 300. According to an embodiment of the disclosure, according to a majority agreement of the nodes participating in the blockchain 300, the behavior data may be added to the blockchain 300 as a new block. The behavior data submitted to the blockchain 300 is not limited to the above example, and may be enrolled in the blockchain 300 as a new block according to various types of consensus algorithms.

The blockchain 300 according to an embodiment of the disclosure may be present for each user who wants to authenticate. For example, when the electronic device 1000 is capable of collecting behavior data from a plurality of users, the electronic device 1000 may participate, as a node, in the plurality of blockchains 300 as many as the number of the plurality of users. The blockchain 300 is not limited to the above-described example, and may be present with respect to a plurality of users or a group of the plurality of users.

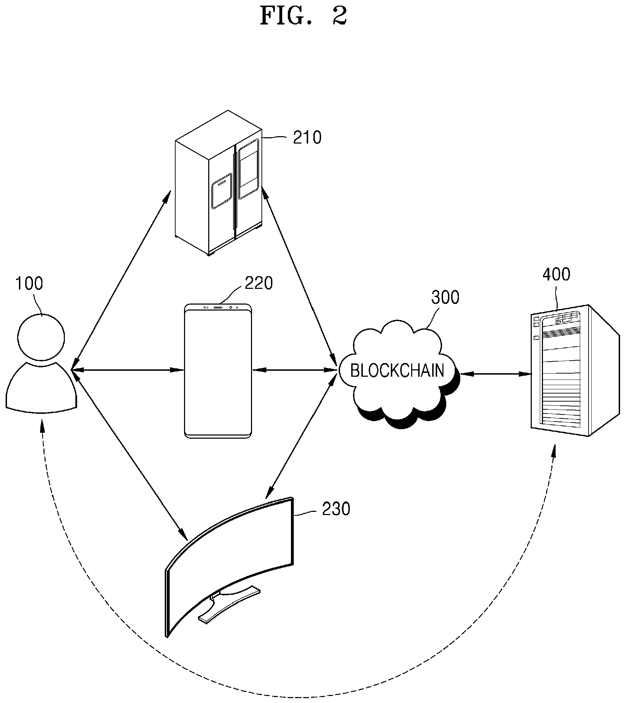

FIG. 2 is a diagram illustrating a blockchain including a plurality of nodes authenticating a user according to an embodiment of the disclosure.

Referring to FIG. 2, the plurality of nodes participating in the blockchain 300 for authenticating the user according to an embodiment of the disclosure may include a plurality of electronic devices 210, 220, 230, and 400. At least one of the plurality of electronic devices 210, 220, 230, and 400 of FIG. 2 may correspond to the electronic device 1000 of FIG. 1.

The nodes participating in the blockchain 300 may be divided into full nodes and light nodes.

The full node may perform most functions that may be performed as a node of the blockchain 300. For example, the full node may store most of information about the blockchain 300 or perform verification to determine whether to add data newly submitted to the blockchain 300 as a new block.

Because the full node must be able to perform most functions that may be performed as the node of the blockchain 300, the full node may be a high-capacity or high-performance electronic device. For example, the full node may be a device such as a special-purpose computer, a general-purpose computer, a supercomputer, a mainframe computer, a personal computer, and a server computer, a cloud computer, etc.

Unlike the full node, the light node may perform some of the functions that may be performed as the node of the blockchain 300. For example, the light node may store part of the information about the blockchain 300. For example, instead of storing all information about all blocks of the blockchain 300, the light node may store summarized partial information with respect to at least one block. The light node may perform some functions as the node of the blockchain 300 and, when necessary, may perform a necessary function in the blockchain 300 through the full node. For example, the light node may not perform verification to determine whether to add newly submitted data to the blockchain 300 as a new block.

In addition, according to an embodiment of the disclosure, instead of storing the entire distributed ledger with respect to the blockchain 300, the light node may store only partial information about the blockchain 300, and access a distributed ledger stored in another node (e.g., the full node) to operate as the node of the blockchain 300. For example, when performing an operation as the node of the blockchain 300, when necessary, the light node may access a distributed ledger stored in another trusted node (e.g., the full node, a cloud server, etc.) to perform the operation.

Accordingly, the light node may be a relatively low capacity or low performance electronic device compared to the full node. For example, the light node may be a mobile device, a wearable device, a laptop computer, a household appliance, etc.

According to an embodiment of the disclosure, the plurality of electronic devices 210, 220, 230, and 400 may participate in the blockchain 300 as full nodes or light nodes, and at least one of nodes participating in the blockchain 300 may collect behavior data of the user 100 from the user 100.

According to an embodiment of the disclosure, the electronic devices 210, 220, and 230 of FIG. 2 may be mobile devices or household appliances, which have a limited capacity, and thus participate in the blockchain 300 as the light nodes. In addition, each of the electronic devices 210, 220, and 230 may include a sensor or an input interface to collect behavior data of the user 100 based on biometric information of the user 100 or input information of the user 100, and perform authentication based on an authentication model.

In addition, according to an embodiment of the disclosure, the electronic device 400 of FIG. 2 may be a high-capacity and high-performance desktop computer, and may participate in the blockchain 300 as the full node. For example, the electronic device 400 may collect the behavior data of the user 100 based on the input information of the user 100 collected through the input interface, and perform authentication based on the authentication model.

In addition, according to an embodiment of the disclosure, the electronic device 400 capable of operating as the full node of FIG. 2 may be a device that may not directly collect the behavior data of the user 100, such as a server computer or a cloud computer. According to an embodiment of the disclosure, the electronic device 400 capable of operating as the full node may authenticate the user based on the behavior data of the user 100 collected by other electronic devices 210, 220, and 230, and, according to results of authentication, may submit the authenticated behavior data to the blockchain 300. In addition, according to an embodiment of the disclosure, the electronic device 400 capable of operating as the full node may authenticate the behavior data of the user 100 collected by the other electronic devices 210, 220, and 230, instead of the other electronic devices 210, 220, and 230.

According to an embodiment of the disclosure, at least one node (e.g., first, second, and third electronic devices) participating in the blockchain 300 may be devices owned by the same user 100. The at least one nodes 210, 220, 230, and 400 participating in the blockchain 300 are not limited thereto, and may be devices that are not owned by the same user 100 but capable of collecting behavior data from the same user 100.

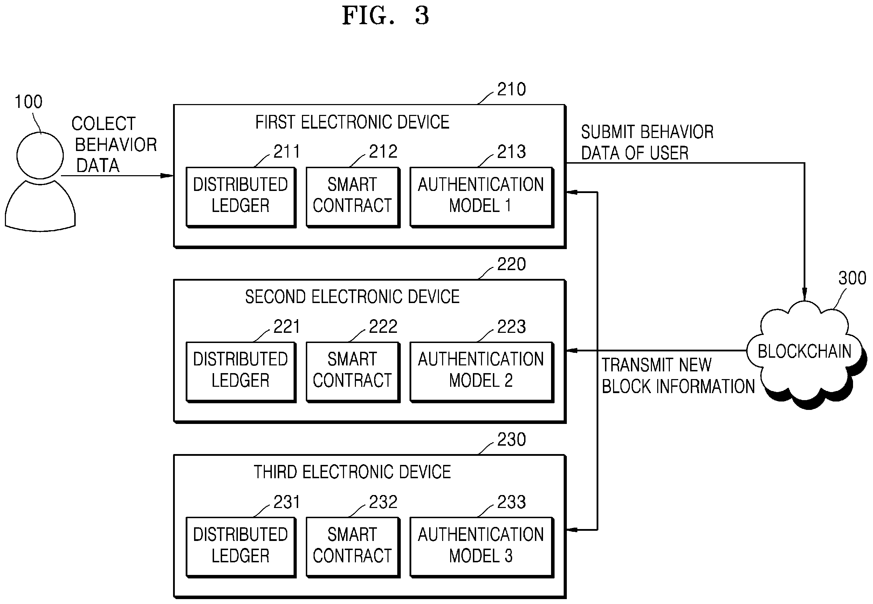

FIG. 3 is a diagram illustrating operations of the blockchain 300 and the plurality of electronic devices 210, 220, and 230 for performing user authentication according to an embodiment of the disclosure.

At least one of the plurality of electronic devices 210, 220, and 230 of FIG. 3 may correspond to the electronic device 1000 of FIG. 1.

Referring to FIG. 3, the first electronic device 210 may collect behavior data from the user 100 and authenticate the user 100. For example, the first electronic device 210 may authenticate the collected behavior data based on an authentication model 1 213 stored in the first electronic device 210. According to an embodiment of the disclosure, based on the authentication model 1 213, a confidence value with respect to behavior data may be determined, and user authentication on the behavior data may be performed based on the confidence value.

Because the confidence value according to an embodiment of the disclosure may be obtained through an operation performed internally by the first electronic device 210, the confidence value may be safe from external attacks.

According to an embodiment of the disclosure, the first electronic device 210 may perform an operation according to a request of the user 100 based on results of authentication with respect to the behavior data. For example, when the results of authentication with respect to the behavior data show that the confidence value is greater than or equal to a reference value, the first electronic device 210 may determine that the user 100 of the behavior data is an authentic user and perform the operation according to the request of the user 100.

Meanwhile, when the results of authentication with respect to the behavior data show that the confidence value is less than or equal to the reference value, the first electronic device 210 may additionally obtain other behavior data with respect to the user 100. For example, the first electronic device 210 may request the user 100 for additional information to verify that the user 100 is the authentic user, and obtain the additional information provided from the user 100 as the above-described other behavior data. As another example, the first electronic device 210 may obtain behavior data (e.g., location information) in which the confidence value is lower than the reference value and other types of behavior data (e.g., user face information) as the above-described other behavior data.

The first electronic device 210 may determine whether to perform the operation according to the request of the user 100 based on the other behavior data. For example, the first electronic device 210 may determine a confidence value with respect to the other behavior data based on the authentication model, and perform user authentication based on the determined confidence value. According to an embodiment of the disclosure, when the confidence value with respect to the other behavior data is greater than or equal to the reference value, the other behavior data may be submitted to the blockchain 300 as authenticated behavior data.

According to an embodiment of the disclosure, the operation according to the request of the user 100 may be automatically performed by a smart contract 212 included in each of the electronic devices 210, 220, and 230.

'Smart contract' is an 'automated contract' system that automatically executes a contract when all programmed conditions are satisfied. According to the smart contract, contract conditions may be specified in computer codes, and the contract may be automatically executed when the conditions are met. According to an embodiment of the disclosure, it may be set as a contract performance condition of the smart contract 212 that the confidence value of the behavior data obtained based on the authentication model 1 213 is equal to or greater than the reference value, and when the contract performance condition is satisfied, the operation requested by the user may be automatically performed as an operation to performance the contract.

In addition, according to an embodiment of the disclosure, the first electronic device 210 may submit the authenticated behavior data to the blockchain 300 based on results of authentication with respect to the behavior data.

The behavior data submitted to the blockchain 300 may be added to the blockchain 300 as a new block because a consensus is achieved between at least one nodes participating in the blockchain 300, and may be enrolled in the blockchain 300. For example, the behavior data may be verified by at least one full node among nodes participating in the blockchain 300. In addition, according to the results of verification, the at least one full node may agree on whether to enroll the behavior data in the blockchain 300. According to an embodiment of the disclosure, when a consensus is achieved between the nodes by a majority agreement among full nodes that have performed verification, the behavior data may be added to the blockchain 300 as a new block.

According to an embodiment of the disclosure, when the behavior data is added to the blockchain 300 as the new block, information about the new block may be transmitted to the first electronic device 210, the second electronic device 220, and the third electronic device 230 participating in the blockchain 300 as nodes. For example, when a consensus is achieved between at least one full nodes through verification, and the behavior data is added to the blockchain 300 as a new block, information about the new block may be transmitted to the first, second, and third electronic devices 210, 220, and 230 so as to be reflected in a distributed ledger of each node.

Each of the electronic devices 210, 220, and 230 that have received the information about the new block may refine the distributed ledgers 211, 221, and 231 respectively stored in the electronic devices 210, 220, and 230 and the authentication models 1, 2, and 3 213, 223, and 233 based on the information about the new block. For example, in each of the distributed ledgers 211, 221, and 231, information about blocks included in the blockchain 300 may be updated based on the information about the new block. In addition, the authentication models 213, 223, and 233 may be retrained and may be refined by the electronic devices 210, 220, and 230 respectively based on behavior data included in the new block.

According to an embodiment of the disclosure, the respective authentication models 1, 2, and 3 213, 223, and 233 of the electronic devices 210, 220, and 230 may be stored in at least one of memories and distributed file systems, for example, an inter planetary file system (IPFS), of the electronic devices 210, 220, and 230.

The distributed file system refers to a file storage system based on a method of receiving data from a plurality of storage devices in which data is stored, instead of receiving data from a server according to a server-client method. For example, the first electronic device 210 may refine the authentication model 1 213 based on the newly enrolled block data of the blockchain 300, and then transmit the updated authentication model 1 213 to a plurality of storage devices, and store the authentication model 1 213 in the distributed file system. In addition, the first electronic device 210 may receive a part of the authentication model 1 213, for example, a data line in which the authentication model 1 213 is divided, from the plurality of storage devices, an authentication model 1-1, an authentication model 1-2 and an authentication model 1-3 from different storage devices, to obtain the authentication model 1 213 from the distributed file system. The authentication model according to an embodiment of the disclosure is not limited to the above-described example, and may be stored in various devices in various ways.

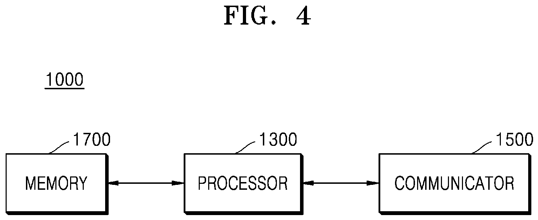

FIG. 4 is a block diagram illustrating an internal configuration of the electronic device 1000 according to an embodiment of the disclosure.

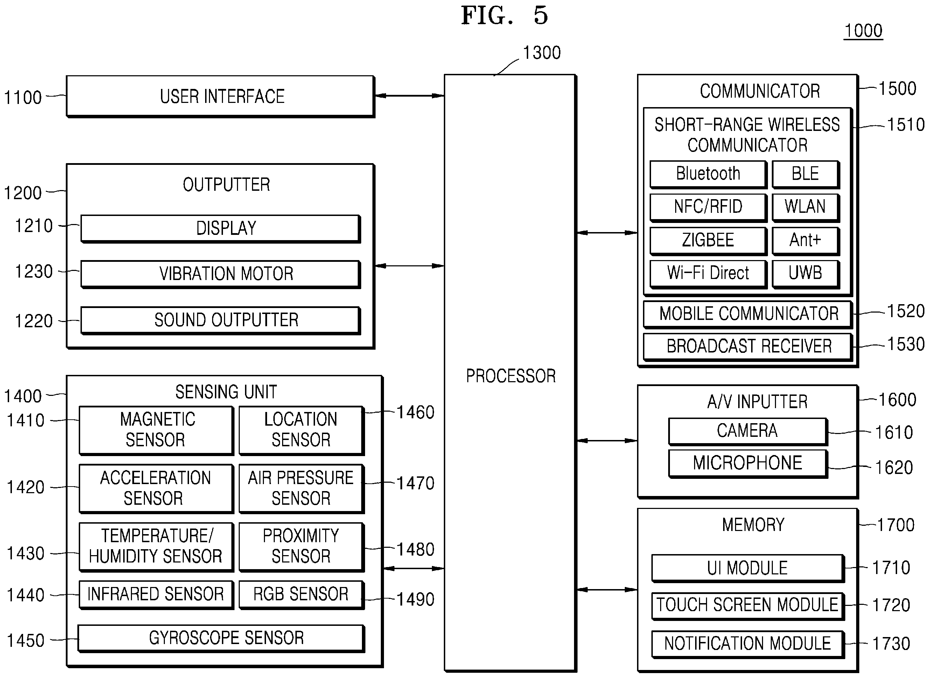

FIG. 5 is a block diagram illustrating an internal configuration of the electronic device 1000 according to an embodiment of the disclosure.

Referring to FIG. 4, the electronic device 1000 may include a processor 1300, a memory 1700, and a communicator 1500. However, not all of the components shown in FIG. 4 are indispensable components of the electronic device 1000. The electronic device 1000 may be implemented by more components than the components illustrated in FIG. 4, or the electronic device 1000 may be implemented by fewer components than the components illustrated in FIG. 4.

For example, as illustrated in FIG. 5, the electronic device 1000 may include a user inputter 1100, an outputter 1200, a sensing unit 1400, and an audio/video (A/V) inputter 1600, in addition to the processor 1300, the memory 1700, and the communicator 1500.

The user inputter 1100 means a means for a user to input data for controlling the electronic device 1000. For example, the user inputter 1100 may include a key pad, a dome switch, a touch pad (a contact capacitance type, a pressure resistive type, an infrared ray detection type, a surface ultrasonic wave conduction type, an integral tension measurement type, a piezo effect type, etc.), a jog wheel, a jog switch, and the like, but is not limited thereto.

According to an embodiment of the disclosure, the user inputter 1100 may receive a user input for performing a certain operation. The user input received by the user inputter 1100 may be collected as behavior data according to an embodiment of the disclosure.

The outputter 1200 may output an audio signal or a video signal or a vibration signal and may include a display 1210, a sound outputter 1220, and a vibration motor 1230.

The outputter 1200 according to an embodiment of the disclosure may output results of performing an operation according to a user request. For example, a certain operation may be performed by the electronic device 1000 according to results of performing authentication on the behavior data, and the results of performing the certain operation may be output through the outputter 1200.

The display 1210 may display and output information processed by the electronic device 1000.

Meanwhile, the display 1210 and a touch pad are configured as a touch screen in a layer structure, the display 1210 may be used as an input device in addition to as an output device. The display 1210 may include at least one of a liquid crystal display, a thin film transistor-liquid crystal display, an organic light-emitting diode display, a flexible display, a three-dimensional (3D) display, or an electrophoretic display. Also, the electronic device 1000 may include two or more displays 1210 according to an implementation type of the electronic device 1000.

The sound outputter 1220 may output audio data received from the communicator 1500 or stored in the memory 1700.

The vibration motor 1230 may output a vibration signal. Also, the vibration motor 1230 may output the vibration signal when a touch is input to the touch screen.

The processor 1300 may generally control the overall operation of the electronic device 1000. For example, the processor 1300 may generally control the user inputter 1100, the outputter 1200, the sensing unit 1400, the communicator 1500, and the A/V inputter 1600 by executing programs stored in the memory 1700. The electronic device 1000 may include the at least one processor 1300.

The processor 1300 may be configured to process a command of a computer program by performing basic arithmetic, logic, and input/output operations. The command may be provided to the processor 1300 from the memory 1700 or may be received through the communicator 1500 and provided to the processor 1300. For example, the processor 1300 may be configured to execute the command in accordance with program code stored in a recording device, such as a memory.

The processor 1300 according to an embodiment of the disclosure may collect behavior data of a user and perform authentication on the collected behavior data. The processor 1300 may perform authentication using an authentication model trained based on at least one piece of behavior data of a user enrolled in the blockchain 300 in which the electronic device 1000 participates. The processor 1300 may submit the authenticated behavior data to the blockchain 300 according to results of authentication on the behavior data. The behavior data submitted to the blockchain 300 may be added to the blockchain 300 as a new block because a consensus is achieved between nodes participating in the blockchain 300, and may be enrolled in the blockchain 300.

The sensing unit 1400 may sense a state of the electronic device 1000 or a state around the electronic device 1000 and may transmit sensed information to the processor 1300. According to an embodiment of the disclosure, the information sensed by the sensing unit 1400 is collected behavior data collected of a user and may be transmitted to the processor 1300.

The sensing unit 1400 may include at least one of a magnetic sensor 1410, an acceleration sensor 1420, a temperature/humidity sensor 1430, an infrared sensor 1440, a gyroscope sensor 1450, a location sensor (e.g. a GPS) 1460, an air pressure sensor 1470, a proximity sensor 1480, or an RGB sensor (an illuminance sensor) 1490, but is not limited thereto.

The communicator 1500 may include one or more components that allow the electronic device 1000 to communicate with a server 2000 or an external device (not shown). For example, the communicator 1500 may include a short-range wireless communicator 1510, a mobile communicator 1520, and a broadcast receiver 1530.

The communicator 1500 according to an embodiment of the disclosure may transmit the behavior data of the authenticated by the processor 1300 to the blockchain 300. For example, the communicator 1500 may transmit the authenticated behavior data to the at least one node so that at least one node participating in the blockchain 300 may verify the behavior data.

The short-range wireless communicator 1510 may include a Bluetooth communicator, a Bluetooth low energy (BLE) communicator, a near field communicator, a WLAN communicator, a WLAN (WiFi) communicator, a Zigbee communicator, an infrared data association (IrDA) communicator, a Wi-Fi direct (WFD) communicator, an ultra wideband (UWB) communicator, an Ant+ communicator, etc., but is not limited thereto.

The mobile communicator 1520 may transmit and receive a radio signal to and from at least one of a base station, an external terminal, or a server on a mobile communication network. Here, the radio signal may include various types of data according to a speech call signal, a video call signal, or a text/multimedia message transmission/reception.

The broadcast receiver 1530 may receive a broadcast signal and/or broadcast-related information from outside through a broadcast channel. The broadcast channel may include a satellite channel and a terrestrial channel. The electronic device 1000 may not include the broadcast receiver 1530 according to an implementation example.

The A/V inputter1600 is for inputting an audio signal or a video signal, and may include a camera 1610, a microphone 1620, and the like. The camera 1610 may obtain an image frame such as a still image or a moving image through an image sensor in a video communication mode or a photographing mode. An image captured through the image sensor may be processed through the processor 1300 or a separate image processor (not shown).

The microphone 1620 may receive an external sound signal and process the received signal as electrical speech data.

The memory 1700 may store program for processing and controlling the processor 1300 and may store data input to or output from the electronic device 1000.

The memory 1700 according to an embodiment of the disclosure may store the behavior data of the user collected by the electronic device 1000 and an authentication model used to authenticate the behavior data of the user. In addition, the memory 1700 may further store information related to a smart contract and a distributed ledger as information related to the blockchain 300. Based on the information related to the smart contract and the distributed ledger stored in the memory 1700, the electronic device 1000 may submit authenticated behavior data to the blockchain 300 or may refine an authentication model using information about a block enrolled in the blockchain 300.

The memory 1700 may include at least one type storage medium of a flash memory type, a hard disk type, a multimedia card micro type, a card type memory (e.g., SD or XD memory), RAM (Random Access Memory), SRAM (Static Random Access Memory), ROM (Read Only Memory), EEPROM (Electrically Erasable Programmable Read-Only Memory), PROM (Programmable Read-Only Memory), a magnetic memory, a magnetic disk, or an optical disk.

The programs stored in the memory 1700 may be classified into a plurality of modules according to their functions, and may include, for example, a UI module 1710, a touch screen module 1720, a notification module 1730, etc.

The UI module 1710 may provide a specialized Ul, a GUI, and the like that interact with the electronic device 1000 for each application. The touch screen module 1720 may sense a touch gesture on the user on the touch screen and may transmit information about the touch gesture to the processor 1300. The touch screen module 1720 according to some embodiments of the disclosure may recognize and analyze a touch code. The touch screen module 1720 may be configured as separate hardware including a controller.

Various sensors may be arranged inside or near the touch screen for sensing the touch on the touch screen or a close touch. A tactile sensor is an example of a sensor for sensing the touch on the touch screen. The tactile sensor refers to a sensor for sensing the touch of a specific object at a level of human feeling or at a higher level than that. The tactile sensor may sense a variety of information such as roughness of a contact surface, hardness of a contact material, and temperature of a contact point.

Touch gestures of the user may include a tap, a touch and hold, a double tap, a drag, a fanning, a flick, a drag and drop, a swipe, etc.

The notification module 1730 may generate a signal for notifying occurrence of an event of the electronic device 1000.

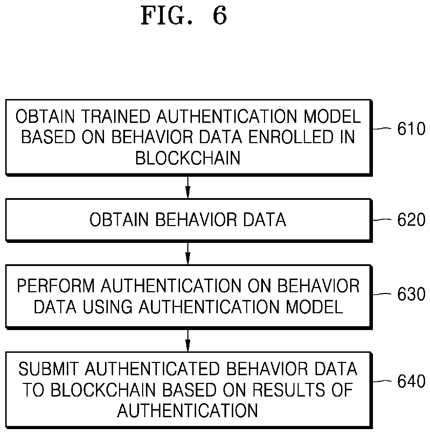

FIG. 6 is a flowchart illustrating a method of performing user authentication according to an embodiment of the disclosure.

Referring to FIG. 6, in operation 610, the electronic device 1000 may obtain a trained authentication model based on behavior data enrolled in the blockchain 300. The authentication model may be stored in a memory of the electronic device 1000, and whenever a new block is enrolled in the blockchain 300, may be retrained by the electronic device 1000 based on behavior data of the new block and refined. The authentication model according to an embodiment of the disclosure is trained and used inside the electronic device 1000, and thus may be robust against external attacks on the authentication model. The authentication model is not limited to the above-described example, and may be stored in various devices according to a distributed file system or may be stored in an external server connected to the electronic device 1000.

In operation 620, the electronic device 1000 may obtain the behavior data collected from the user. For example, the electronic device 1000 may obtain biometric information of the user sensed by a sensor, environment information, and user input information received through an input interface as the behavior data of the user. The electronic device 1000 is not limited to the above-described example, and may obtain various types of data related to the user as the behavior data.

In operation 630, the electronic device 1000 may perform authentication on the behavior data using the authentication model obtained in operation 610. For example, the electronic device 1000 may obtain a confidence value indicating a possibility that the user of the behavior data is an authentic user by using the authentication model. For example, as a behavior pattern of the user by the authentication model and a behavior pattern of the user by the behavior data match, a higher confidence value may be obtained.

In operation 640, the electronic device 1000 may submit the authenticated behavior data to the blockchain 300 based on results of authentication performed in operation 630. For example, when the confidence value with respect to the behavior data is greater than or equal to a reference value, the electronic device 1000 may determine that a user represented by the behavior data is an authentic user, and submit the behavior data to the blockchain 300 as the behavior data with respect to the authentic user. The behavior data submitted to the blockchain 300 may be enrolled in the blockchain 300 through a process of achieving a consensus between between nodes participating in the blockchain 300.

Also, when the behavior data submitted to the blockchain 300 is enrolled in the blockchain 300, the electronic device 1000 may refine the authentication model based on the enrolled behavior data. The authentication model refined by the electronic device 1000 based on the behavior data enrolled in the blockchain 300 may be an authentication model used by the electronic device 1000 to perform user authentication according to an embodiment of the disclosure.

In addition, when results of authentication performed in operation 630 show that the behavior data collected from the user is authenticated, the electronic device 1000 may perform an operation requested from the user. For example, the electronic device 1000 may perform an operation that requires a high level of security requested by the user, based on results of authentication with respect to the behavior data.

According to an embodiment of the disclosure, when the collected behavior data is authenticated, the operation requested from the user may be performed by the electronic device 1000 during a session set based on a time when the behavior data is collected. For example, a time period from the time when the behavior data is collected to a preset period may be set as the one session. According to an embodiment of the disclosure, the electronic device 1000 may continuously collect behavior data before the session is terminated and repeatedly performing authentication on the collected behavior data to continue to maintain a certain level of security.

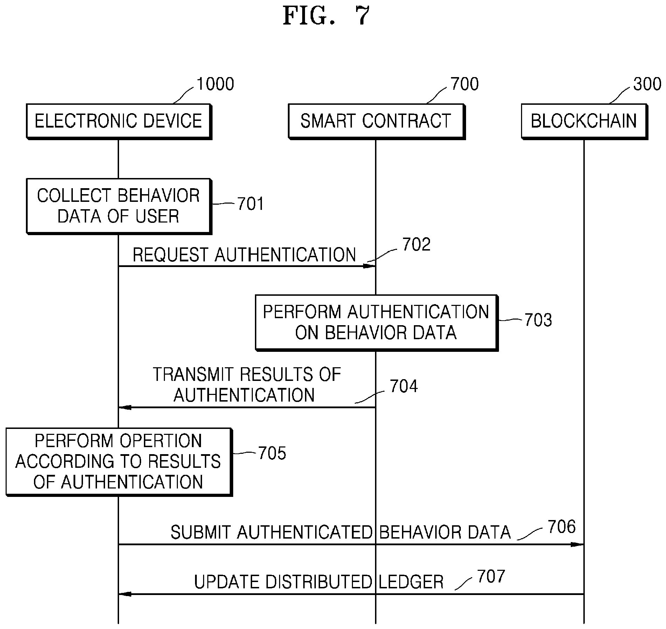

FIG. 7 is a flowchart illustrating a method, performed by the electronic device 1000, of submitting behavior data to the blockchain 300 according to an embodiment of the disclosure.

Referring to FIG. 7, in operation 701, the electronic device 1000 may collect the behavior data of a user according to an embodiment of the disclosure, and in operation 702, may request authentication from the smart contract 700 provided in the electronic device 1000. For example, the electronic device 1000 may periodically request authentication from the smart contract 700 based on periodically collected behavior data in order to periodically perform continuous authentication without user recognition.

The smart contract 700 may be a user interface installed inside the electronic device 1000 that causes the electronic device 1000 to automatically perform a preset operation when a preset condition is satisfied.

In operation 703, the smart contract 700 may perform authentication on the behavior data according to the request of the electronic device 1000. For example, the smart contract 700 may obtain a confidence value with respect to the behavior data based on an authentication model stored in the electronic device 1000. According to an embodiment of the disclosure, when the confidence value is less than or equal to the reference value, the smart contract 700 may additionally obtain other behavior data for user authentication, and obtain the confidence value again based on the other behavior data. The smart contract 700 may determine that user authentication is successful when the confidence value of the behavior data or the additionally obtained behavior data is greater than or equal to the reference value.

In operation 704, the smart contract 700 may transmit results of authentication to the electronic device 1000 based on a confidence value with respect to the behavior data or a confidence value with respect to additionally obtained other behavior data. According to an embodiment of the disclosure, because the results of authentication are transmitted by the smart contract 700, the operation requested by the user may be automatically performed according to the results of authentication of operation 703.

In operation 705, the electronic device 1000 may perform an operation based on the results of authentication transmitted from the smart contract 700. For example, the electronic device 1000 may determine whether to perform the operation requested by the user based on the results of authentication transmitted from the smart contract 700.

In operation 706, the electronic device 1000 may submit behavior data authenticated by the smart contract 700 to the blockchain 300. The behavior data submitted to the blockchain 300 may be enrolled as a new block in the blockchain 300 as a consensus is achieved between nodes participating in the blockchain 300.

When the new block is enrolled in the blockchain 300, the electronic device 1000 may receive data for updateing a distributed ledger in operation 707 in order to reflect information about the newly enrolled block to the distributed ledger of each node participating in the blockchain 300. The electronic device 1000 may update the distributed ledger stored in the electronic device 1000 based on the data received from the blockchain 300 in operation 707.

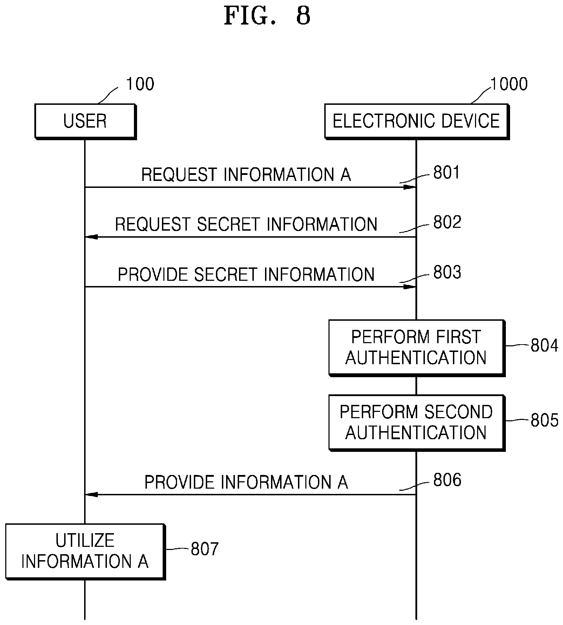

FIG. 8 is a flowchart illustrating a method of performing user authentication in two steps according to an embodiment of the disclosure.

According to an embodiment of the disclosure, user authentication may be performed in two steps of first authentication using an authentication method using an ID and a password, and second authentication using a continuous authentication method with respect to behavior data. The method shown in FIG. 8 shows a method of performing second authentication after the above-described first authentication.

Referring to FIG. 8, in operation 801, the user 100 may request the electronic device 1000 to provide information A. The information A may be information requiring a high level of security, such as personal information and financial information. According to an embodiment of the disclosure, in operation 801, the user 100 may request a specific operation from the electronic device 1000 instead of requesting information. Even when an operation is requested, user authentication according to an embodiment of the disclosure may be performed in the same manner as when information is requested.

In operation 802, the electronic device 1000 may request secret information of the user 100, for example, ID and password information, fingerprint authentication information, face authentication information, pattern authentication information, etc., according to a request of the user 100 to provide information. The secret information of the user 100 may include information for proving that the user 100 is an authentic user. Also, the secret information of the user 100 may be provided to the electronic device 1000 through a direct input of the user 100 in response to a request for authentication information from the electronic device 1000.

In operation 803, the user 100 may provide the secret information according to the request of the electronic device 1000. Also, in operation 804, the electronic device 1000 may perform authentication on the secret information provided from the user 100. For example, based on the secret information provided from the user 100, the electronic device 1000 may perform first authentication to determine whether the user 100 is the authentic user.

Unlike the second authentication, the first authentication according to an embodiment of the disclosure may be performed according to various methods for authenticating a user without using an authentication model.

In operation 805, when the first authentication is successful, the electronic device 1000 may additionally perform the second authentication. For example, the electronic device 1000 may obtain a confidence value with respect to the user 100 based on the behavior data collected from the user 100. The second authentication may be performed based on behavior data collected during one session after the first authentication is performed.

For example, the electronic device 1000 may obtain a confidence value using an authentication model, with respect to the behavior data, representing an operation performed for the user 100 to provide the secret information to the electronic device 1000. The behavior data may include a value of data input by the user 100 to provide the secret information to the electronic device 1000, a location of the electronic device 1000 when the user 100 inputs the secret information, a time taken to input data for the user 100 to provide the secret information to the electronic device 1000, etc. The behavior data according to an embodiment of the disclosure may also include the secret information input by the user 100 for the first authentication. The electronic device 1000 is not limited to the above-described example, and may collect various types of behavior data for the user 100.

The electronic device 1000 may perform second authentication based on the confidence value. For example, when the confidence value is greater than or equal to the reference value, the electronic device 1000 may determine that second authentication is successful, and behavior data having the confidence value greater than or equal to the reference value may be submitted to the blockchain 300. Meanwhile, when the confidence value is less than or equal to the reference value, the electronic device 1000 may determine that the second authentication fails, and behavior data having the confidence value less than or equal to the reference value may not be submitted to the blockchain 300.

In operation 806, the electronic device 1000 may provide the information A requested by the user 100 to the user 100 based on results of performing the first authentication and the second authentication. For example, when the first authentication is successful, the electronic device 1000 may periodically perform the second authentication during a session set based on a time when the first authentication is successful to continuously authenticate the user. The behavior data for performing second authentication may be continuously collected from the user without having to be directly input by the user. The electronic device 1000 may repeatedly perform second authentication based on the continuously collected behavior data.

In operation 807, the user 100 may use the information A provided from the electronic device 1000 or may control the electronic device 1000 to perform another operation using the information A.

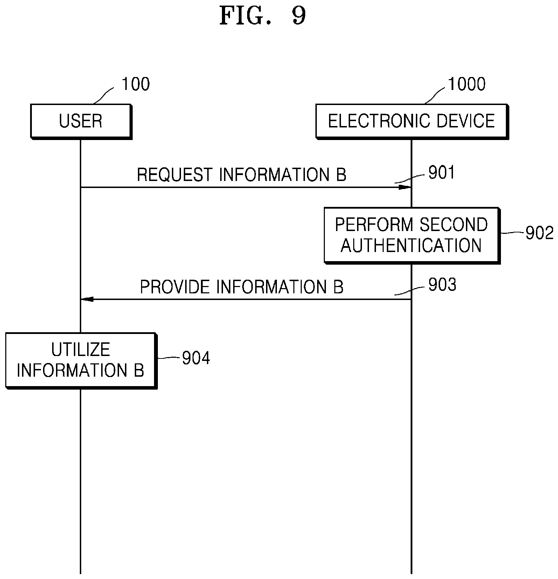

FIG. 9 is a flowchart illustrating a method of performing second authentication according to an embodiment of the disclosure. FIG. 9 shows the method of performing second authentication during a set session after the above-described first authentication is successful.

Referring to FIG. 9, in operation 901, the user 100 may request the electronic device 1000 to provide information B. The electronic device 1000 may continuously perform continuous authentication for authenticating a user in order to determine whether to provide the information B according to a request of the user 100 based on the behavior data of the user.

According to an embodiment of the disclosure, the second authentication may be performed during one session set after the first authentication is successful, and the second authentication may be performed based on various types of behavior data collected from the user without a process of requesting secret information for authentication from the user.

In operation 902, the electronic device 1000 may obtain a confidence value with respect to the collected behavior data of the user 100 by using an authentication model to perform the second authentication. For example, when the confidence value is greater than or equal to a reference value, the electronic device 1000 may determine that the second authentication is successful.

In operation 903, the electronic device 1000 may provide the information B to the user 100 according to results of performing the second authentication.

In operation 904, the user 100 may use the information B provided from the electronic device 1000 or may control the electronic device 1000 to perform another operation using the information B.

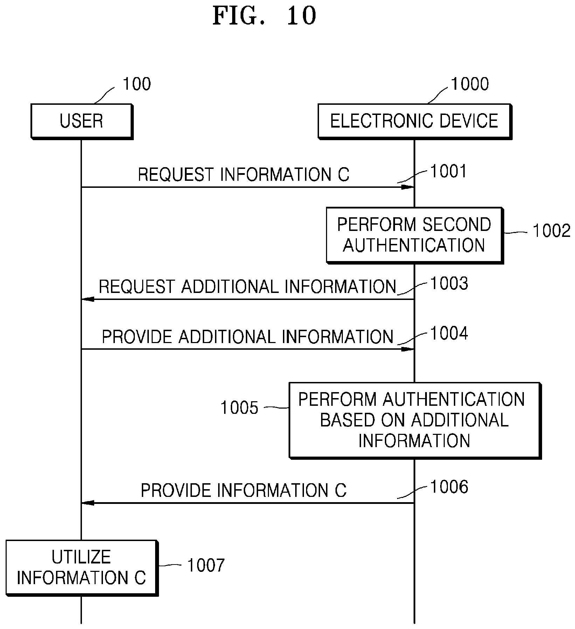

FIG. 10 is a flowchart illustrating a method of performing second authentication according to an embodiment of the disclosure. FIG. 10 shows the method of performing second authentication during a set session after the above-described first authentication is successful. Unlike FIG. 9, according to FIG. 10, when the second authentication fails, the second authentication may be additionally performed based on additional information received from a user.

Referring to FIG. 10, in operation 1001, the user 100 may request the electronic device 1000 to provide information C. The electronic device 1000 may continuously perform continuous authentication for authenticating a user in order to determine whether to provide the information C according to a request of the user 100 based on the behavior data of the user.

In operation 1002, the electronic device 1000 may obtain a confidence value from currently collected behavior data of the user as a result of periodically performing the second authentication during one session set after the first authentication is successful. Second authentication may be performed based on behavior data collected from the user without a process of requesting secret information for authentication from the user.

In operation 1003, when the confidence value is less than or equal to a reference value, the electronic device 1000 may request the user 100 to provide additional information for user authentication. For example, the electronic device 1000 may additionally request the secret information that may prove that the user 100 is an authentic user from the user 100. The secret information that may be additionally requested may include, for example, date of birth information of the user 100, address information, family relationship information, etc. The secret information is not limited to the above-described example, and various types of information that may prove that the user 100 is the authentic user may be requested from the user 100 as the secret information.

In operation 1004, the user 100 may provide the additional information in response to a request of the electronic device 1000. In operation 1005, the electronic device 1000 may authenticate the user 100 based on the additional information provided from the user 100. For example, a confidence value based on an authentication model may be determined with respect to the additional information provided from the user 100.

The disclosure is not limited to the above example, and, instead of directly requesting the additional information from the user 100, the electronic device 1000 may obtain additionally other behavior data collected from the user 100 without a direct input from the user 100 to obtain the additional information.

In operation 1005, the electronic device 1000 may perform user authentication again based on the additional information. For example, when the confidence value obtained based on the additional information is greater than or equal to the reference value, the electronic device 1000 may determine that user authentication is successful, and the additional information used to obtain the confidence value may be submitted to the blockchain 300 as authenticated behavior data. Meanwhile, when the confidence value is less than or equal to the reference value, the electronic device 1000 may determine that user authentication fails, and the additional information may not be submitted to the blockchain 300.

In operation 1006, the electronic device 1000 may provide the information C to the user 100 according to results of the user authentication performed in operation 1005.

In operation 1007, the user 100 may use the information C provided from the electronic device 1000 or may control the electronic device 1000 to perform another operation using the information C.

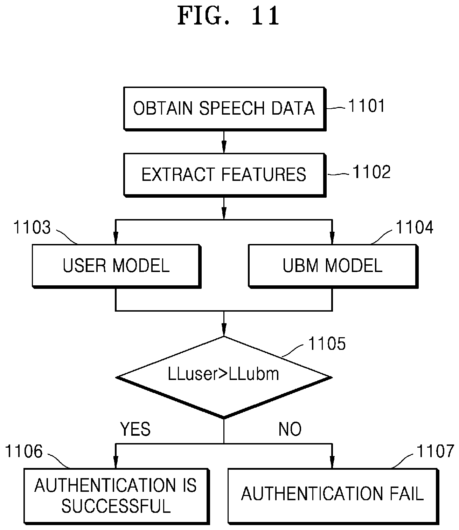

FIG. 11 is a diagram illustrating an example of performing user authentication based on behavior data according to an embodiment of the disclosure.

The example of FIG. 11 shows the method of authenticating a user when the behavior data is speech data. According to an embodiment of the disclosure, the behavior data is not limited to the speech data, and various types of behavior data may be obtained to authenticate the user.

Referring to FIG. 11, in operation 1101, the electronic device 1000 may obtain the speech data as the behavior data of the user 100. According to an embodiment of the disclosure, for user authentication without a recognition of the user 100, the electronic device 1000 may continuously receive the speech data of the user during one session to obtain the speech data of the user.

In operation 1102, the electronic device 1000 may extract features from the obtained speech data of the user 100. Feature extraction with respect to the speech data may be performed through a method such as mel-frequency cepstrum coefficients (MFCC) and linear predictive coding (LPC). The speech data is not limited to the above-described example, and features of the speech data may be extracted according to various methods.

In operation 1103, the electronic device 1000 may apply feature information extracted with respect to the speech data to each of a user model 1103 and a universal background model (UBM) 1104.

The above-described user model may be a model trained based on a plurality of speech data with respect to the user 100 by, for example, a Gaussian mixture model (GMM). In addition, the UBM is a general feature distribution model of various types of music. The user model is not limited to the above-described example, and a model trained in various ways may be used with respect to the speech data.

According to an embodiment of the disclosure, the electronic device 1000 may determine whether the feature information extracted with respect to the speech data is close to a pattern by the user model 1103 or a pattern by the UBM. Values indicating whether the feature information extracted with respect to the speech data is close to the pattern by the user model 1103 and is close to the pattern by the UBM may be represented as LLᵤₛₑᵣ and LL_{ubm}, respectively.

In operation 1105, the electronic device 1000 may determine which is greater between LLᵤₛₑᵣ indicating that the feature information extracted with respect to the speech data is close to the pattern by the user model 1103 or LL_{ubm} indicating that the feature information extracted with respect to the speech data is close to the pattern by the UBM.

For example, the confidence value of behavior data for user authentication may be determined based on contrast values of LLᵤₛₑᵣ and LL_{ubm}. For example, when LLᵤₛₑᵣ and LL_{ubm} values are confidence values and the reference value is 1, the electronic device 1000 may perform user authentication based on whether the LLᵤₛₑᵣ and LL_{ubm} values are greater than 1. The confidence value is not limited to the above-described example, and may be determined based on the LLᵤₛₑᵣ and LL_{ubm} values in various ways.

When the LLᵤₛₑᵣ value is greater, the electronic device 1000 may determine that the confidence value of the behavior data for user authentication is greater than the reference value. Accordingly, in operation 1106, the electronic device 1000 may determine that the speech data obtained in operation 1101 is the speech data of an authentic user and may determine that authentication is successful.

Meanwhile, when the LL_{ubm} value is greater, the electronic device 1000 may determine that the confidence value of the behavior data for user authentication is smaller than the reference value. Accordingly, in operation 1107, the electronic device 1000 may determine that the speech data obtained in operation 1101 is difficult to be considered as the speech data of the authentic user, and determine that authentication fails.

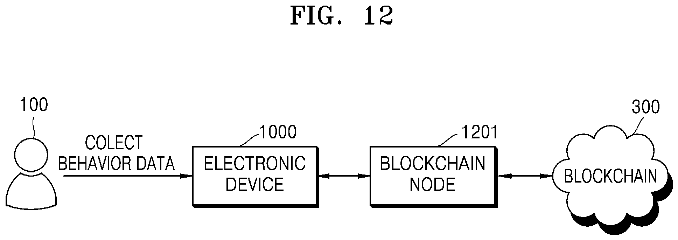

FIG. 12 is a diagram illustrating an example in which the electronic device 1000 operates as a node of the blockchain 300 through a node 1201 participating in the blockchain 300 according to an embodiment of the disclosure.

Referring to FIG. 12, the electronic device 1000 may collect behavior data from the user 100 to authenticate the user 100. The electronic device 1000 may perform authentication on the collected behavior data using an authentication model to authenticate the user 100. The authentication model used for authentication may be refined based on behavior data enrolled in a distributed ledger of the blockchain 300 in which the electronic device 1000 participates as a node.

The electronic device 1000 according to an embodiment of the disclosure is the node participating in the blockchain 300, and may verify the behavior data to determine whether to enroll in the blockchain 300 or may store data about the distributed ledger including information about blocks enrolled in the blockchain 300.

However, when the electronic device 1000 according to an embodiment of the disclosure lacks the calculation power, the electronic device 1000 may not perform an operation of verifying the behavior data. For example, the operation of verifying behavior data that may be enrolled in the blockchain 300 may be performed by another blockchain node 1201 having good calculation power instead of the electronic device 1000.

In addition, when the size of a memory of the electronic device 1000 is insufficient to store the distributed ledger of the blockchain 300, the electronic device 1000 may obtain data of the distributed ledger through the blockchain node 1201 participating in the blockchain 300. The electronic device 1000 may refine the authentication model used in the electronic device 1000 based on the data of the distributed ledger stored in the other blockchain node 1201.

The other blockchain node 1201 described above is a device having better calculation power and storage capability than the electronic device 1000 and may be a device participating in the blockchain 300 as a full node.

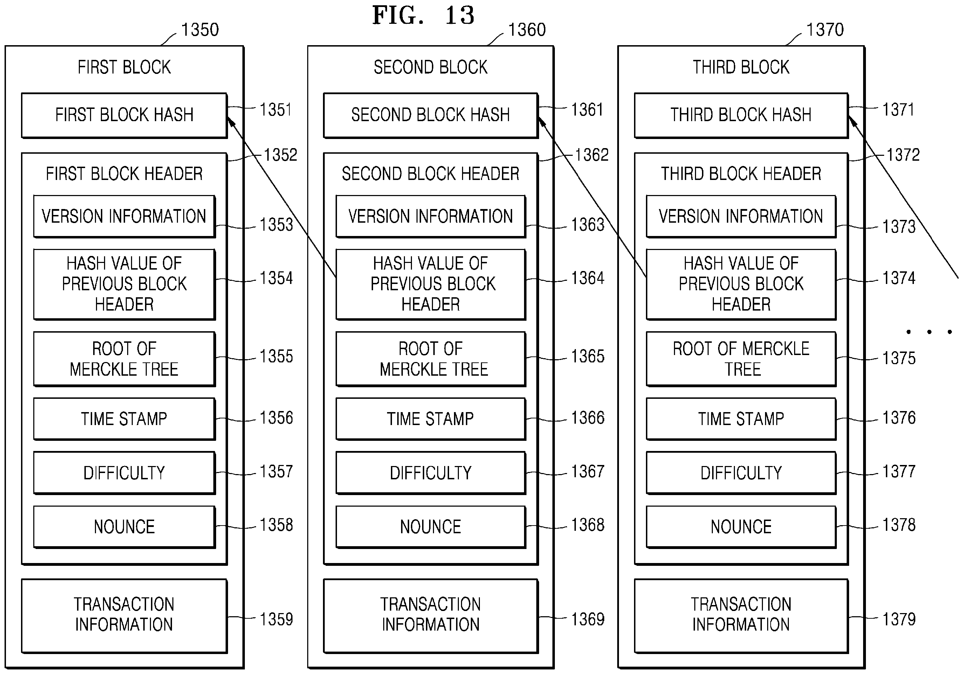

FIG. 13 is a block diagram illustrating structures of a block and a blockchain according to an embodiment of the disclosure.

As shown in FIG. 13, the blockchain 300 may be configured by connecting blocks 1350, 1360, and 1370 on which valid transaction information is recorded. That is, the data structure of the blockchain 300 may be a certain data structure including units in which blocks on which transaction information 1359, 1369, and 1379 are recorded are arranged in order.

The transaction information 1359, 1369, and 1379 according to an embodiment of the disclosure may include information about behavior data enrolled in the blockchain 300. Accordingly, authenticated behavior data according to an embodiment of the disclosure may be included in a block included in the blockchain 300 as transaction information.

In addition, the data structure of the blockchain 300 may include a data structure in which respective block headers are connected in the shape of a chain with reference to a previous block header, and a Merkle tree in which a hash reference indicating data of transaction information and the data of the transaction information are connected in the shape of a tree.

The blocks 1350, 1360, and 1370 included in the blockchain 300 may include block hashes 1351, 1361, and 1371, block headers 1352, 1362, and 1372, the transaction information 1359, 1369, and 1379, etc. In addition, the block headers 1352, 1362, and 1372 may include information of versions 1353, 1363, 1373 of a current program, hash values 1354, 1364, and 1374 of the previous block header, roots 1355, 1365, and 1375 of the Merkle tree, time staffs 1356, 1366, and 1376, difficulties 1357, 1367, and 1377, and nonces 1358, 1368, and 1378.

The block hashes 1351, 1361, and 1371 may be hash values of a hash function applied by using the information of versions 1353, 1363, 1373 of the current program, the hash values 1354, 1364, and 1374 of the previous block header, the roots 1355, 1365, and 1375 of the Merkle tree, the timestaffs 1356, 1366, and 1376, the difficulties 1357, 1367, and 1377, and the nonces 1358, 1368, and 1378 as input values. That is, the values of the block hashes 1351, 1361, and 1371 may be values obtained by hashing the block headers 1352, 1362, and 1372, not values obtained by hashing the entire block.

The hash values 1354, 1364, and 1374 of the previous block header may be used to uniquely identify the block headers 1352, 1362, and 1372, and refer to the previous block header. When the block headers 1352, 1362, and 1372 refer to the previous block header, an individual block header and an order of blocks may be maintained.

Referring to FIG. 13, because the first block 1350 is an initial block and has no previous block, there is no reference indicating the previous block header. Accordingly, the hash value 1354 of the previous block header of the first block 1350 is 0. In addition, because the second block 1360 has the first block 1350 that is the previous block, the second block header 1362 has the hash value 1364 indicating the first block header 1352. Likewise, because the third block 1370 has the second block 1360 that is the previous block, the third block header 1372 has the hash value 1374 indicating the second block header 1362.

The Merkle tree may mean a structure in which the hash references and the data of the transaction information are connected in the shape of the tree. The hash reference may refer to the data of the transaction information using an encrypted hash value. Meanwhile, because the encryption hash value is a unique value of data, different pieces of data do not have the same hash value.

Upon explaining a process of generating the Merkle tree in detail, the hash references (e.g., a first hash reference, a second hash reference, a third hash reference, and a fourth hash reference) respectively indicating the data of the transaction information (e.g., first transaction information, second transaction information, third transaction information, and fourth transaction information) may be generated. When the hash references are generated, hash references (e.g., a 12th hash reference indicating the first hash reference and the second hash reference and a 34th hash reference indicating the third hash reference and the fourth hash reference) indicating pairs of the hash references may be generated. Then, a work of generating the hash references indicating the pairs of hash references may be repeatedly performed to generate a single hash reference (e.g., a 1234th hash reference indicating the 12th hash reference and the 34th hash reference). That is, the Merkle tree may be a tree-shape structure that starts from the single hash reference and is connected to the data of each transaction information. The roots 1355, 1365, and 1375 of the Merkle tree may mean a finally generated single hash reference.

The times staffs 1356, 1366, and 1376 may indicate the time when a work starts for proof of the work.

The difficulties 1357, 1367, and 1377 may mean constraints in proof of work or hash puzzles.

The nonces 1358, 1368, and 1378 may mean values adjusted such that the value of the block hash satisfies the constraints for proof of work.

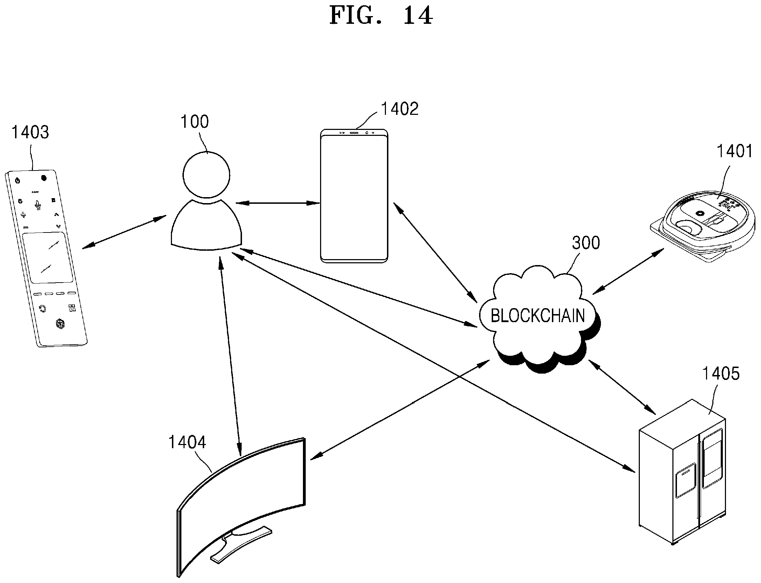

FIG. 14 is a diagram illustrating an embodiment utilizing user authentication according to an embodiment of the disclosure.

Referring to FIG. 14, various electronic devices 1401, 1402, 1403, 1404, and 1405 around the user 100 may collect various types of behavior data from the user 100 to authenticate the user 100.

A robot cleaner 1401 according to an embodiment of the disclosure may collect various data related to a house environment to generate map data on a structure of a house. For example, the robot cleaner 1401 may measuring a movement distance and a collision point while moving around the house to determine a room size, a living room size, a location of each room, etc. and generate the map data based on determined information.

In addition, the robot cleaner 140 may request information about a current location of the user 100 from a smartphone 1402 of the user 100 on the assumption that the user 100 always carries the smartphone 1402. The robot cleaner 1401 may add location information of the user 100 received from the smartphone 1402 to the map data.

The robot cleaner 1401 may determine a moving path on the map data based on the location information of the user 100. For example, the robot cleaner 1401 may determine the moving path so as not to move to a room in which the user 100 is located.

In addition, the robot cleaner 1401 according to an embodiment of the disclosure may perform user authentication based on the location information of the user 100 received from the smartphone 1402. According to an embodiment of the disclosure, the robot cleaner 1401 may collect the location information of the user 100 as behavior data, and authenticate the behavior data based on an authentication model of the robot cleaner 1401. The robot cleaner 1401 may submit the location information of the user 100 to the blockchain 300 as the behavior data according to results of authentication. When the behavior data submitted to the blockchain 300 is enrolled, the behavior data collected by the robot cleaner 1401 may be used to refine an authentication model used in another electronic device.

The smartphone 1402 according to an embodiment of the disclosure may collect biometric information of the user 100, location information, movement information, etc. as the behavior data using various types of sensors. For example, the biometric information of the user 100 may include various types of information about the biometrics of the user 100, such as fingerprint information of the user 100, iris information, face recognition information, pulse information, and heartbeat information. In addition, the location information of the user 100 may include various types of information about the location of the user 100, such as GPS information that may be sensed by a sensor, and location information of the smartphone 1402 that may be determined through Wi-Fi and Bluetooth connection. In addition, the movement information of the user 100 may include various types of information about the movement of the user 100 that may be sensed by an acceleration sensor, a gravity sensor, etc. For example, the movement information of the user 100 may include information related to an operation of the user 100 holding the smartphone 1402 and moving from a smart TV 1404 to a smart refrigerator 1405.

In addition, the smartphone 1402 according to an embodiment of the disclosure may perform user authentication based on various types of information about the 100 sensed by the sensor. For example, the smartphone 1402 may authenticate the biometric information based on an authentication model of the smartphone 1402, and submit the biometric information of the user 100 to blockchain 300 as the behavior data according to results of authentication. When the behavior data submitted to the blockchain 300 is enrolled, the behavior data collected from the smartphone 1402 may be used to refine an authentication model used in another electronic device. In addition, the smartphone 1402 may perform an operation requiring security according to results of authentication and provide the results to the user 100.

According to an embodiment of the disclosure, the smartphone 1402 may directly receive information for authentication from the user 100 to perform first authentication. For example, the user 100 may input various information to the smart phone 1402 as information for authentication such as input ID and password information, input a fingerprint to the smartphone 1402 for fingerprint authentication, input pattern information, or photograph a face for face authentication. The first authentication may be performed based on information directly received from the user according to various methods for authenticating the user.

When the first authentication is successful, the smartphone 1402 may establish one session and perform second authentication during the set session. According to an embodiment of the disclosure, the second authentication may be continuously performed when an operation requiring security is performed. For example, the second authentication may be continuously performed after the first authentication is successful while an financial application is being operated.

The second authentication may be performed based on information sensed by at least one sensor provided in the smartphone 1402 and information input by the user 100 to perform various operations, without a process of receiving direct information for authentication from the user 100. For example, the second authentication may be performed when the smartphone 1402 collects information input by the user 100 to perform an account transfer as behavior data. In addition, information directly input for authentication by the user 100, for example, information input for the first authentication, is also obtained as the behavior data for the second authentication so that the second authentication may be performed.

In addition, the second authentication may be performed when the smartphone 1402 collects, as the behavior data, an image in which a part (e.g., iris, face, etc.) of the body of the user 100 is photographed while the user 100 is performing the account transfer.

Further, the second authentication may be performed when the smartphone 1402 collects operations requested by the user as the behavior data. For example, when the user performs an account transfer through a financial application on a fixed date each month, the smartphone 1402 may collect an account transfer request of the user as the behavior data, and performs second authentication based on the collected behavior data.

According to an embodiment of the disclosure, a remote controller 1403 may collect the information input by the user 100 as the behavior data. For example, the remote controller 1403 may collect button information input by the user 100 as action data. As another example, the remote controller 1403 may collect information sensed by a gravity sensor of the remote controller 1403 as the behavior data of the user 100. For example, the remote controller 1403 may sense when the user 100 picks up the remote controller 1403 at a specific time, and collect sensed information as the behavior data of the user 100.

The remote controller 1403 according to an embodiment of the disclosure may perform user authentication based on the behavior data collected by the remote controller 1403. The remote controller 1403 may authenticate the behavior data based on an authentication model of the remote controller 1403, and may submit the behavior data to the blockchain 300 according to results of authentication. When the behavior data submitted to the blockchain 300 is enrolled, the behavior data collected by the remote controller 1403 may be used to refine an authentication model used in another electronic device.

The smart TV 1404 according to an embodiment of the disclosure may collect information input by the user 100 as the behavior data. For example, the smart TV 1404 may collect channel information input by the user 100 as the behavior data. As another example, the smart TV 1404 may collect information about a content purchase request by the user 100 as behavior data of the user 100.

The smart TV 1404 according to an embodiment of the disclosure may perform user authentication based on the behavior data collected by the smart TV 1404. The smart TV 1404 may authenticate the behavior data based on an authentication model of the smart TV 1404, and may submit the behavior data to the blockchain 300 according to the authentication result. Also, the smart TV 1404 may perform a content purchase operation according to a request of the user 100 based on results of authentication. When the behavior data submitted to the blockchain 300 is enrolled, the behavior data collected by the smart TV 1404 may be used to refine an authentication model used in another electronic device.

The smart refrigerator 1405 according to an embodiment of the disclosure may collect information collected in relation to an operation performed by the user 100 as the behavior data. The smart refrigerator 1405 may be a device capable of providing various information and services to the user 100 over a network beyond a function of refrigerating or freezing food.

For example, the smart refrigerator 1405 may determine a state of currently stored food and perform online purchase of food that needs to be purchased. When there is not much beer left in the smart refrigerator 1405, the smart refrigerator 1405 may inquire to the user 100 whether to proceed with an additional purchase because there is not much beer left. Through a purchase system provided in the smart refrigerator 1405, the additional purchase of beer may be performed in response to a purchase request from the user 100. The smart refrigerator 1405 may collect information collected in relation to an operation of the user 100 to take the beer stored in the smart refrigerator 1405, information about the beer purchase request from the user 100, and information related to authentication input from the user 100 to purchase beer as the behavior data of the user 100.

The smart refrigerator 1405 according to an embodiment of the disclosure may perform user authentication based on the behavior data collected by the smart refrigerator 1405. The smart refrigerator 1405 may authenticate the behavior data based on an authentication model of the smart refrigerator 1405 and may submit the behavior data to the blockchain 300 according to results of authentication. Also, the smart refrigerator 1405 may perform a beer purchase operation according to a request of the user 100 based on results of authentication. When the behavior data submitted to the blockchain 300 is enrolled, the behavior data collected by the smart refrigerator 1405 may be used to refine an authentication model used in another electronic device.

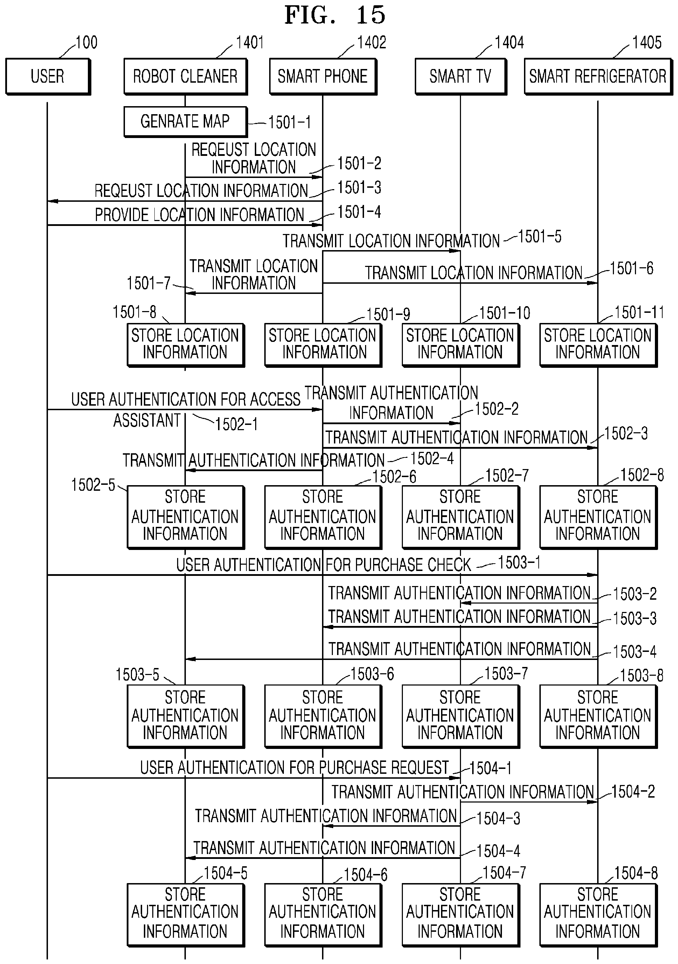

FIG. 15 is a flowchart illustrating a method, performed by a plurality of electronic devices 1401, 1402, 1404, and 1405, of performing user authentication according to an embodiment of the disclosure. The plurality of electronic devices 1401, 1402, 1404, and 1405 of FIG. 15 may respectively correspond to the plurality of electronic devices 1401, 1402, 1404, and 1405 of FIG. 14.

Referring to FIG. 15, in operation 1501-1, the robot cleaner 1401 may generate a map related to a structure of house while performing a cleaning operation. The robot cleaner 1401 may request location information of the user 100 from the smartphone 1402 in operation 1501-2 in order to add the location information of the user 100 to the generated map.

In operation 1501-3, the smartphone 1402 may request current location information from the user 100 according to a request from the robot cleaner 1401, and in operation 1501-4, may receive the location information of the user 100. The smartphone 1402 may directly contact the user 100 to obtain the current location information, but is not limited thereto, and obtain the location information based on information sensed by a sensor provided in the smartphone 1402. The smartphone 1402 is not limited to the above-described example, and may obtain the current location information of the user 100 through various methods.

In operations 1501-5, 1501-6, and 1501-7, the smartphone 1402 may transmit the current location information of the user 100 to the robot cleaner 1401, the smart TV 1404, and the smart refrigerator 1405 as behavior data of the user 100. For example, the smartphone 1402 may perform authentication on the current location information of the user 100 as the behavior data of the user 100 according to an embodiment of the disclosure and may submit the current location information of the user 100 to the blockchain 300 according to results of authentication to transmit the current location information of the user 100 to the robot cleaner 1401, the smart TV 1404, and the smart refrigerator 1405. The current location information of the user 100 submitted to the blockchain 300 is enrolled through verification so that the robot cleaner 1401, the smart TV 1404, and the smart refrigerator 1405 may obtain the current location information of the user 100.

In operations 1501-8, 1501-9, 1501-10 and 1501-11, the robot cleaner 1401, the smartphone 1402, the smart TV 1404 and the smart refrigerator 1405 may store the current location information of the user 100 submitted to the blockchain 300 in a distributed ledger of each device as the behavior data of the user 100. For example, the current location information of the user 100 may be stored in the distributed ledger of each of the devices 1401, 1402, 1404, and 1405 as transaction information enrolled in the blockchain 300. Also, based on information stored in the distributed ledger of each of the devices 1401, 1402, 1404, and 1405, an authentication model of each of the devices 1401, 1402, 1404, and 1405 used for user authentication may be refined.

In operation 1502-1, the user 100 may perform user authentication for accessing an assistant of the smartphone 1402. The assistant may refer to a user interface through which the user 100 may control an operation of the smartphone 1402 through an interactive interface. In order to access the assistant, the user 100 may input various information to the smart phone 1402 as information for authentication such as input ID and password information, input a fingerprint to the smartphone 1402 for fingerprint authentication, input pattern information, or photograph a face for face authentication.

In operations 1502-2, 1502-3, and 1502-3, the smartphone 1402 may transmit the information input by the user 100 for authentication to the robot cleaner 1401, the smart TV 1404, and the smart refrigerator 1405 as the behavior data of the user 100. For example, the smartphone 1402 may perform authentication on the information input by the user 100 for authentication according to an embodiment of the disclosure as the behavior data of the user 100. In addition, the smartphone 1402 may submit the information input by the user 100 for authentication to the blockchain 300 according to results of authentication to transmit the information input by the user 100 for authentication to the robot cleaner 1401, the smart TV 1404, and the smart refrigerator 1405. The information input by the user 100 for authentication submitted to the blockchain 300 is enrolled through verification so that the robot cleaner 1401, the smart TV 1404, and the smart refrigerator 1405 may obtain the information input by the user 100 for authentication.

In operations 1502-5, 1502-6, 1502-7 and 1502-8, the robot cleaner 1401, the smartphone 1402, the smart TV 1404 and the smart refrigerator 1405 may store the information input by the user 100 for authentication submitted to the blockchain 300 in a distributed ledger of each device as the behavior data of the user 100. For example, the information input by the user 100 for authentication may be stored in the distributed ledger of each of the devices 1401, 1402, 1404, and 1405 as transaction information enrolled in the blockchain 300. Also, based on information stored in the distributed ledger of each of the devices 1401, 1402, 1404, and 1405, an authentication model of each of the devices 1401, 1402, 1404, and 1405 used for user authentication may be refined.

In operation 1503-1, the user 100 may perform user authentication to check a purchase history in the smart refrigerator 1405. In order to check the purchase history, the user 100 may input various information to a user interface of the smart refrigerator 1405 as information for authentication such as input ID and password information, input a fingerprint to the smartphone 1402 for fingerprint authentication, input pattern information, or photograph a face for face authentication.

In operations 1503-2, 1503-3, and 1503-3, the smart refrigerator 1405 may transmit the information input by the user 100 for authentication to the robot cleaner 1401, the smartphone 1402, and the smart TV 1404 as the behavior data of the user 100. For example, the smart refrigerator 1405 may perform authentication on the information input by the user 100 for authentication according to an embodiment of the disclosure as the behavior data of the user 100. In addition, the smart refrigerator 1405 may submit the information input by the user 100 for authentication to the blockchain 300 according to results of authentication to transmit the information input by the user 100 for authentication to the robot cleaner 1401, the smartphone 1402, and the smart TV 1404. The information input by the user 100 for authentication submitted to the blockchain 300 is enrolled through verification so that the robot cleaner 1401, the smartphone 1402, and the smart TV 1404 may obtain the information input by the user 100 for authentication.

In operations 1503-5, 1503-6, 1503-7 and 1503-8, the robot cleaner 1401, the smartphone 1402, the smart TV 1404 and the smart refrigerator 1405 may store the information input by the user 100 for authentication submitted to the blockchain 300 in a distributed ledger of each device as the behavior data of the user 100. For example, the information input by the user 100 for authentication may be stored in the distributed ledger of each of the devices 1401, 1402, 1404, and 1405 as transaction information enrolled in the blockchain 300. Also, based on information stored in the distributed ledger of each of the devices 1401, 1402, 1404, and 1405, an authentication model of each of the devices 1401, 1402, 1404, and 1405 used for user authentication may be refined.

In operation 1504-1, the user 100 may perform user authentication to request a content purchase from the smart TV 1404. In order to request the content purchase, the user 100 may input various information to a user interface of the smart TV 1404 as information for authentication such as input ID and password information, input a fingerprint to the smartphone 1402 for fingerprint authentication, input pattern information, or photograph a face for face authentication.

In operations 1504-2, 1504-3, and 1504-3, the smart TV 1404 may transmit the information input by the user 100 for authentication to the robot cleaner 1401, the smartphone 1402, and the smart refrigerator 1405 as the behavior data of the user 100. For example, the smart TV 1404 may perform authentication on the information input by the user 100 for authentication according to an embodiment of the disclosure as the behavior data of the user 100. In addition, the smart TV 1404 may submit the information input by the user 100 for authentication to the blockchain 300 according to results of authentication to transmit the information input by the user 100 for authentication to the robot cleaner 1401, the smartphone 1402, and the smart refrigerator 1405. The information input by the user 100 for authentication submitted to the blockchain 300 is enrolled through verification so that the robot cleaner 1401, the smartphone 1402, and the smart refrigerator 1405 may obtain the information input by the user 100 for authentication.

In operations 1504-5, 1504-6, 1504-7 and 1504-8, the robot cleaner 1401, the smartphone 1402, the smart TV 1404 and the smart refrigerator 1405 may store the information input by the user 100 for authentication submitted to the blockchain 300 in a distributed ledger of each device as the behavior data of the user 100. For example, the information input by the user 100 for authentication may be stored in the distributed ledger of each of the devices 1401, 1402, 1404, and 1405 as transaction information enrolled in the blockchain 300. Also, based on information stored in the distributed ledger of each of the devices 1401, 1402, 1404, and 1405, an authentication model of each of the devices 1401, 1402, 1404, and 1405 used for user authentication may be refined.

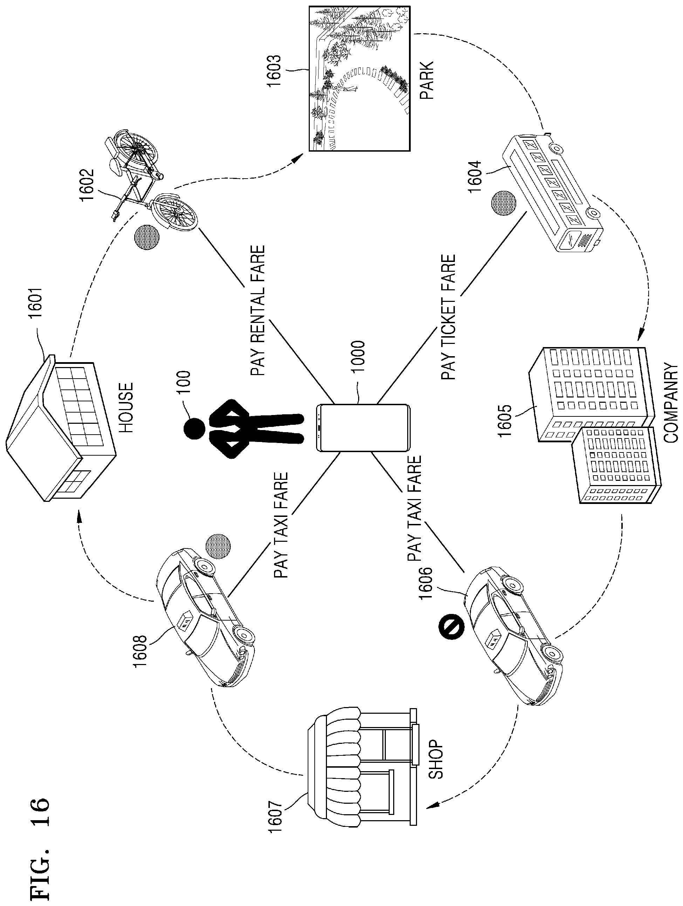

FIG. 16 is a diagram illustrating an example of performing user authentication according to an embodiment of the disclosure.

Referring to FIG. 16, the user 100 may move from a house 1601 to a park 1603, from the park 1603 to a company 1605, from the company 1605 to a shop 1607, and from the store 1608 to the house 1601. The user 100 may pay a bicycle rental fare 1602, a bus ticket fare 1604, or a taxi fare 1606 and 1608 for movement in respective moving routes.

According to an embodiment of the disclosure, a moving route of the user 100 and a request for fare payments 1602, 1604, 1606, and 1608 for bicycles, buses, and taxis may be collected by the electronic device 1000 as behavior data of the user 100. In addition, the electronic device 1000 may authenticate the collected behavior data based on an authentication model, and perform an operation requiring security according to results of authentication according to an embodiment of the disclosure. For example, the electronic device 1000 may perform the fare payments 1602, 1604, 1606, and 1608 of the user 100 for bicycles, buses, and taxis according to results of authentication.

In addition, according to an embodiment of the disclosure, the electronic device 1000 may perform authentication on the behavior data collected from the user 100, without the user 100 directly inputting information for authentication, and may perform authentication according to results of authentication. Accordingly, according to an embodiment of the disclosure, an operation may be performed by the electronic device 1000 in a state in which a security level is not lowered even without the user 100 inputting the information for authentication.

For example, when a confidence value with respect to behavior data that the user 100 pays the taxi fare 606 on a route moving from the company 1605 to the shop 1607 is less than or equal to a reference value, the electronic device 1000 may request additional information with respect to a payment request of the user 100 performed in the shop 1607. For example, when the user 100 pays the taxi fare 606, as payment is performed in a manner different from the existing pattern, such as using a mobile payment instead of a previously used card payment, the confidence value with respect to the behavior data of paying the taxi fare 606 may be determined to be less than or equal to the reference value. Accordingly, the electronic device 1000 may request additional information for user authentication in response to the payment request of the user 100 in the shop 1607 as the confidence value is low. The electronic device 1000 may perform a payment operation requested by the user 100 through authentication on the additional information.

In addition, the behavior data authenticated according to results of authentication may be submitted to the blockchain 300, and when the behavior data submitted to the blockchain 300 is newly enrolled in the blockchain 300, the electronic device 1000 may refine an authentication model for authenticating the behavior data, based on the behavior data newly enrolled in the blockchain 300. Also, the electronic device 1000 may update a distributed ledger of the electronic device 1000 based on information on the behavior data newly enrolled in the blockchain 300.

In addition, according to an embodiment of the disclosure, actions performed by the user 100 at various locations, such as the house 1601, the park 1603, the company 1605, and the shop 1607, may be collected as behavior data, and based on the collected behavior data, user authentication may be repeatedly performed. The behavior data may be collected by various types of electronic devices 1000 capable of collecting information about the behavior of the user 100. For example, the behavior data may be collected by various types of electronic devices or electronic systems (e.g.. household appliances (house), an access system (company), and a product payment system (store)) installed in various places such as the electronic device 1000 and the house 1601 owned by the user 100, the park 1603, the company 1605 and the shop 1607, and capable of collecting information of the user 100.

According to an embodiment of the disclosure, based on the behavior data of the user 100 collected in various ways, user authentication may be continuously performed, and based on results of authentication, an electronic device or an electronic system installed in the house 1601, the park 1603, the company 1605, and the shop 1607 may determine whether to perform the operation (e.g., permission to enter some zones) requested by the user 100.

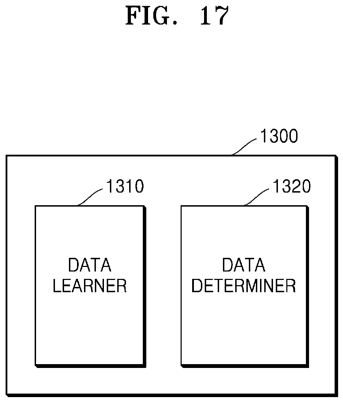

FIG. 17 is a block diagram of a processor 1300 according to some embodiments of the disclosure.

Referring to FIG. 17, the processor 1300 according to some embodiments of the disclosure may include a data learner 1310 and a data determiner 1320.

The data learner 1310 may learn a reference for determining a situation. The data learner 1310 may learn the reference about what data to use for determining a predetermined situation or how to determine the situation using the data. The data learner 1310 may obtain data to be used for learning, and apply the obtained data to a data determination model that will be described later, thereby learning the reference for determining the situation.

According to an embodiment of the disclosure, the data learner 1310 may learn behavior data collected from the user 100 so that an authentication model for authenticating the behavior data may be generated or refined.

The data determiner 1320 may determine the situation based on the data. The data determiner 1320 may determine the situation from predetermined data by using the learned data determination model. The data determiner 1320 may obtain predetermined data according to a previously determined reference by learning and use the data determination model having the obtained data as an input value, thereby determining the predetermined situation based on the predetermined data. Further, a resultant value output by the data determination model having the obtained data as the input value may be used to refine the data determination model.

According to an embodiment of the disclosure, the data determiner 1320 may authenticate the behavior data collected from the user 100 using the authentication model learned by the data learner 1310 to determine whether the user 100 is an authentic user.

At least one of the data learner 1310 or the data determiner 1320 may be manufactured in the form of at least one hardware chip and mounted on an electronic device. For example, at least one of the data learner 1310 or the data determiner 1320 may be manufactured in the form of a dedicated hardware chip for Al or may be manufactured as a part of an existing general purpose processor (e.g. a CPU or an application processor) or a graphics-only processor (e.g., a GPU) and mounted on the electronic device.

In this case, the data learner 1310 and the data determiner 1320 may be mounted on one electronic device or may be mounted on separate electronic devices. For example, one of the data learner 1310 and the data determiner 1320 may be included in the electronic device, and the other may be included in a server. The data learner 1310 and the data determiner 1320 may also provide model information constructed by the data learner 1310 to the data determiner 1320 by wired or wirelessly, and provide data input to the data determiner 1320 to the data learner 1310 as additional training data.

Meanwhile, at least one of the data learner 1310 or the data determiner 1320 may be implemented as a software module. When the at least one of the data learner 1310 or the data determiner 1320 is implemented as the software module (or a program module including an instruction), the software module may be stored in non-transitory computer readable media. Further, in this case, at least one software module may be provided by an operating system (OS) or by a predetermined application. Alternatively, one of the at least one software module may be provided by the OS, and the other one may be provided by the predetermined application.

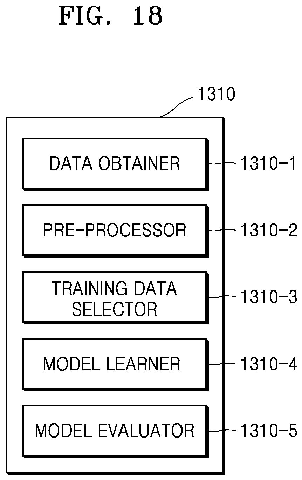

FIG. 18 is a block diagram of the data learner 1310 according to some embodiments of the disclosure.

Referring to FIG. 18, the data learner 1310 according to some embodiments of the disclosure may include a data obtainer 1310-1, a preprocessor 1310-2, a training data selector 1310-3, a model learner 1310-4 and a model evaluator 1310-5.

The data obtainer 1310-1 may obtain data necessary for the situation determination. The data obtainer 1310-1 may obtain data necessary for learning for the situation determination.

The data obtainer 1310-1 may obtain various information collected from the user 100 as behavior data according to an embodiment of the disclosure. According to an embodiment of the disclosure, the behavior data used for learning an authentication model may be data enrolled, as transaction information, in the blockchain 300 in which the electronic device 1000 participates. Accordingly, the data obtainer 1310-1 may obtain data for training the authentication model through the blockchain 300.

The preprocessor 1310-2 may pre-process the obtained data such that the obtained data may be used for learning for the situation determination. The preprocessor 1310-2 may process the obtained data in a predetermined format such that the model learner 1310-4, which will be described later, may use the obtained data for learning for the situation determination.

For example, the preprocessor 1310-2 may process the behavior data of the user 100 obtained through the blockchain 300 into a format for training the authentication model.

The training data selector 1310-3 may select data necessary for learning from the preprocessed data. The selected data may be provided to the model learner 1310-4. The training data selector 1310-3 may select the data necessary for learning from the preprocessed data according to a predetermined reference for the situation determination. The training data selector 1310-3 may also select the data according to a predetermined reference by learning by the model learner 1310-4, which will be described later.

The model learner 1310-4 may learn a reference as to how to determine a situation based on training data. Also, the model learner 1310-4 may learn a reference as to which training data is used for the situation determination.

According to an embodiment of the disclosure, the model learner 1310-4 may generate an authentication model capable of determining whether the user 100 is the authentic user based on various types of behavior data obtained from the user 100.

In addition, the model learner 1310-4 may train a data determination model used for the situation determination using the training data. In this case, the data determination model may be a previously constructed model. For example, the data determination model may be the previously constructed model by receiving basic training data (e.g., a sample image, etc.)

The data determination model may be constructed in consideration of an application field of a determination model, a purpose of learning, or the computer performance of an apparatus, etc. The data determination model may be, for example, a model based on a neural network. For example, a model such as Deep Neural Network (DNN), Recurrent Neural Network (RNN), and Bidirectional Recurrent Deep Neural Network (BRDNN) may be used as the data determination model, but is not limited thereto.

According to various embodiments of the disclosure, when there are a plurality of data determination models that are previously constructed, the model learner 1310-4 may determine a data determination model having a high relation between input training data and basic training data as the data determination model. In this case, the basic training data may be previously classified according to data types, and the data determination model may be previously constructed for each data type. For example, the basic training data may be previously classified according to various references such as a region where the training data is generated, a time at which the training data is generated, a size of the training data, a genre of the training data, a creator of the training data, a type of an object in the training data, etc.

Also, the model learner 1310-4 may train the data determination model using a learning algorithm including, for example, an error back-propagation method or a gradient descent method.

Also, the model learner 1310-4 may train the data determination model through supervised learning using, for example, the training data as an input value. Also, the model learner 1310-4 may train the data determination model through unsupervised learning to find the reference for situation determination by learning a type of data necessary for situation determination for itself without any guidance. Also, the model learner 1310-4 may train the data determination model, for example, through reinforcement learning using feedback on whether results of situation determination based on the learning is correct.

Further, when the data determination model is trained, the model learner 1310-4 may store the learned data determination model. In this case, the model learner 1310-4 may store the trained data determination model in a memory of the electronic device including the data determiner 1320. Alternatively, the model learner 1310-4 may store the trained data determination model in a memory of the electronic device including the data determiner 1320 that will be described later. Alternatively, the model learner 1310-4 may store the trained data determination model in a memory of a server connected to the electronic device over a wired or wireless network.

In this case, the memory in which the trained data determination model is stored may also store, for example, a command or data related to at least one other component of the electronic device. The memory may also store software and/or program. The program may include, for example, a kernel, middleware, an application programming interface (API), and/or an application program (or "application").

The model evaluator 1310-5 may input evaluation data to the data determination model, and when results of recognition output from the evaluation data does not satisfy a predetermined reference, the model evaluator 1310-5 may allow the model learner 1310-4 to be trained again. In this case, the evaluation data may be predetermined data for evaluating the data determination model.

For example, when the number or a ratio of evaluation data having incorrect results of recognition among recognition results of the trained data determination model with respect to the evaluation data exceeds a predetermined threshold value, the model evaluator 1310-5 may evaluate that the data determination model does not satisfy the predetermined reference. For example, when the predetermined reference is defined as a ratio of 2%, and when the trained data determination model outputs incorrect results of recognition with respect to evaluation data exceeding 20 among a total of 1000 evaluation data, the model evaluator 1310-5 may evaluate that the trained data determination model is not suitable.

Meanwhile, when there are a plurality of trained data determination models, the model evaluator 1310-5 may evaluate whether each of the trained motion determination models satisfies the predetermined reference and determine a model satisfying the predetermined reference as a final data determination model. In this case, when a plurality of models satisfy the predetermined reference, the model evaluator 1310-5 may determine any one or a predetermined number of models previously set in descending order of evaluation scores as the final data determination model.

Meanwhile, at least one of the data obtainer 1310-1, the preprocessor 1310-2, the training data selector 1310-3, the model learner 1310-4, or the model evaluator 1310-5 in the data learner 1310 may be manufactured in the form of at least one hardware chip and mounted on the electronic device. For example, the at least one of the data obtainer 1310-1, the preprocessor 1310-2, the training data selector 1310-3, the model learner 1310-4, or the model evaluator 1310-5 may be manufactured in the form of a dedicated hardware chip for AI or may be manufactured as a part of an existing general purpose processor (e.g. a CPU or an application processor) or a graphics-only processor (e.g., a GPU) and mounted on the electronic device.

Also, the data obtainer 1310-1, the preprocessor 1310-2, the training data selector 1310-3, the model learner 1310-4, and the model evaluator 1310-5 may be mounted on one electronic device or may be mounted on separate electronic devices. For example, some of the data obtainer 1310-1, the preprocessor 1310-2, the training data selector 1310-3, the model learner 1310-4, and the model evaluator 1310-5 may be included in the electronic device, and the others may be included in the server.

Also, at least one of the data obtainer 1310-1, the preprocessor 1310-2, the training data selector 1310-3, the model learner 1310-4, or the model evaluator 1310-5 may be implemented as a software module. When the at least one of the data obtainer 1310-1, the preprocessor 1310-2, the training data selector 1310-3, the model learner 1310-4, or the model evaluator 1310-5 is implemented as the software module (or a program module including an instruction), the software module may be stored in non-transitory computer readable media. Further, in this case, at least one software module may be provided by an OS or by a predetermined application. Alternatively, one of the at least one software module may be provided by the OS, and the other one may be provided by the predetermined application.

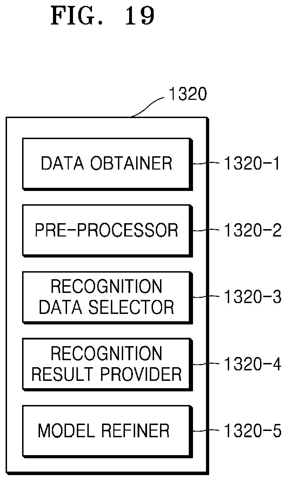

FIG. 19 is a block diagram of the data determiner 1320 according to some embodiments of the disclosure.

Referring to FIG. 19, the data determiner 1320 according to some embodiments of the disclosure may include a data obtainer 1320-1, a preprocessor 1320-2, a recognition data selector 1320-3, a recognition result provider 1320-4 and a model refiner 1320-5.

The data obtainer 1320-1 may obtain data necessary for situation determination, and the preprocessor 1320-2 may preprocess the obtained data such that the obtained data may be used for situation determination. The preprocessor 1320-2 may process the obtained data to a predetermined format such that the recognition result provider 1320-4, which will be described later, may use the obtained data for situation determination.

The recognition data selector 1320-3 may select data necessary for the situation determination from the preprocessed data. The selected data may be provided to the recognition result provider 1320-4. The recognition data selector 1320-3 may select some or all of the preprocessed data according to a predetermined reference for the situation determination. The recognition data selector 1320-3 may also select data according to the predetermined reference by learning by the model learner 1310-4, which will be described later.

The recognition result provider 1320-4 may determine a situation by applying the selected data to a data determination model. The recognition result provider 1320-4 may provide a recognition result according to a data recognition purpose. The recognition result provider 1320-4 may apply the selected data to the data determination model by using the data selected by the recognition data selector 1320-3 as an input value. Also, the recognition result may be determined by the data determination model.

According to an embodiment of the disclosure, the electronic device 1000 may determine whether behavior data collected from the user 100 is behavior data by an authentic user using the authentication model.

The model refiner 1320-5 may refine the data determination model based on evaluation of the results of recognition provided by the recognition result provider 1320-4. For example, the model refiner 1320-5 may provide the model learner 1310-4 with the results of recognition provided by the recognition result provider 1320-4 such that the model learner 1310-4 may refine the data determination model.

According to an embodiment of the disclosure, the model refiner 1320-5 is not limited to the above-described example, and may refine the authentication model based on behavior data newly enrolled in the blockchain 300 in which the electronic device 1000 participates.

Meanwhile, at least one of the data obtainer 1320-1, the preprocessor 1320-2, the recognition data selector 1320-3, the recognition result provider 1320-4, or the model refiner 1320-5 in the data determiner 1320 may be manufactured in the form of at least one hardware chip and mounted on an electronic device. For example, the at least one of the data obtainer 1320-1, the preprocessor 1320-2, the recognition data selector 1320-3, the recognition result provider 1320-4, or the model refiner 1320-5 may be manufactured in the form of a dedicated hardware chip for AI or may be manufactured as a part of an existing general purpose processor (e.g. a CPU or an application processor) or a graphics-only processor (e.g., a GPU) and mounted on the electronic device.

Also, the data obtainer 1320-1, the preprocessor 1320-2, the recognition data selector 1320-3, the recognition result provider 1320-4, and the model refiner 1320-5 may be mounted on one electronic device or may be mounted on separate electronic devices. For example, some of the data obtainer 1320-1, the preprocessor 1320-2, the recognition data selector 1320-3, the recognition result provider 1320-4, and the model refiner 1320-5 may be included in the electronic device, and the others may be included in a server.

Also, at least one of the data obtainer 1320-1, the preprocessor 1320-2, the recognition data selector 1320-3, the recognition result provider 1320-4, or the model refiner 1320-5 may be implemented as a software module. When the at least one of the data obtainer 1320-1, the preprocessor 1320-2, the recognition data selector 1320-3, the recognition result provider 1320-4, or the model refiner 1320-5 is implemented as the software module (or a program module including an instruction), the software module may be stored in non-transitory computer readable media. Further, in this case, at least one software module may be provided by an OS or by a predetermined application. Alternatively, one of the at least one software module may be provided by the OS, and the other one may be provided by the predetermined application.

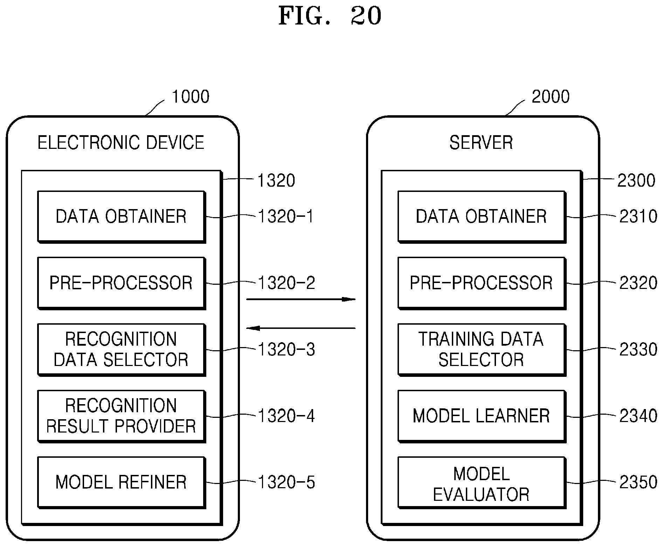

FIG. 20 is a diagram illustrating an example in which the electronic device 1000 and a server 2000 learn and determine data by interacting with each other according to some embodiments of the disclosure.

The electronic device 1000 of FIG. 20 may correspond to at least one of the electronic device 1000 shown in FIG. 1, the plurality of electronic devices 210, 220, 230, and 400 shown in FIG. 2, and the plurality of electronic devices 210, 220, and 230 shown in FIG. 3.

The server 2000 communicates with the electronic device 1000 over a network (not shown), and may be implemented as at least one computer device. The server 2000 may be distributed in the form of a cloud and may provide commands, codes, files, contents, etc.

The server 2000 according to an embodiment of the disclosure may provide the electronic device 1000 with data necessary for the electronic device 1000 to authenticate a user based on behavior data of the user. For example, the server 2000 may provide the electronic device 1000 with an authentication model required to perform user authentication.

The server 2000 according to an embodiment of the disclosure may instead perform operations that may be executed by the electronic device 1000. For example, the server 2000 may authenticate the user based on behavior data collected by the electronic device 1000 instead of the electronic device 1000.

The disclosure is not limited to the above-described example, and the server 2000 may perform various operations for the electronic device 1000 to authenticate the user and transmit results of authentication to the electronic device 1000.

Referring to FIG. 20, the server 2000 may learn a reference for situation determination, and the electronic device 1000 may determine a situation based on results of learning by the server 2000.

In this case, a model learner 2340 of the server 2000 may perform a function of the data learner 1310 shown in FIG. 13. The model learner 2340 of the server 2000 may learn the reference about what data to use for determining a predetermined situation or how to determine the situation using the data. The model learner 2340 may obtain data to be used for learning, and apply the obtained data to a data determination model that will be described later, thereby learning the reference for determining the situation.

Also, the recognition result provider 1320-4 of the electronic device 1000 may determine the situation by applying data selected by the recognition data selector 1320-3 to the data determination model generated by the server 2000. For example, the recognition result provider 1320-4 may transmit the data selected by the recognition data selector 1320-3 to the server 2000 and request the server 2000 to apply the data selected by the recognition data selector 1320-3 to the data determination model and determine the situation. Further, the recognition result provider 1320-4 may receive information about the situation determined by the server 2000 from the server 2000.

For example, the electronic device 1000 may transmit the behavior data collected from the user to the server 2000, and the server 2000 may authenticate the behavior data using an authentication model. The server 2000 may transmit results of authentication performed on the behavior data to the electronic device 1000.

Alternatively, the recognition result provider 1320-4 of the electronic device 1000 may receive the authentication model generated by the server 2000 from the server 2000 and determine a situation using the received authentication model. In this case, the recognition result provider 1320-4 of the electronic device 1000 may apply the data selected by the recognition data selector 1320-3 to the determination model received from the server 2000 to determine the situation.

For example, the electronic device 1000 may apply the behavior data collected from the user to the authentication model received from the server 2000, perform authentication on the behavior data, and provide results of an operation performed according to results of authentication result to the user.

According to an embodiment of the disclosure, user authentication of high reliability and security may be performed based on behavior data of a user collected by at least one electronic device.

An embodiment of the disclosure may be implemented as a recording medium including computer-readable instructions such as a computer-executable program module. The computer-readable medium may be an arbitrary available medium accessible by a computer, and examples thereof include all volatile and non-volatile media and separable and non-separable media. Further, examples of the computer-readable medium may include a computer storage medium and a communication medium. Examples of the computer storage medium include all volatile and non-volatile media and separable and non-separable media, which are implemented by an arbitrary method or technology, for storing information such as computer-readable instructions, data structures, program modules, or other data. The communication medium generally includes computer-readable instructions, data structures, program modules, other data of a modulated data signal, or other transmission mechanisms, and examples thereof include an arbitrary information transmission medium.

Also, in this specification, the term "unit" may be a hardware component such as a processor or a circuit, and/or a software component executed by a hardware component such as a processor.

It will be understood by those of ordinary skill in the art that the foregoing description of the disclosure is for illustrative purposes only and that those of ordinary skill in the art may readily understand that various changes and modifications may be made without departing from the spirit or essential characteristics of the disclosure. It is therefore to be understood that the above-described embodiments of the disclosure are illustrative in all aspects and not restrictive. For example, each component described as a single entity may be distributed and implemented, and components described as being distributed may also be implemented in a combined form.

The scope of the disclosure is defined by the appended claims rather than the detailed description and all changes or modifications derived from the meaning and scope of the claims and their equivalents are to be construed as being included within the scope of the disclosure.

## Claims

1. A method, performed by an electronic device, of authenticating a user, the method comprising:
obtaining an authentication model;
obtaining behavior data with respect to the user;
authenticating the obtained behavior data by using the obtained authentication model; and
based on results of the authenticating, submitting the authenticated behavior data to a blockchain,
wherein the authentication model is a model trained based on at least one piece of behavior data with respect to the user enrolled in the blockchain
wherein the authenticating of the obtained behavior data comprises continuously authenticating the obtained behavior data during one session,
wherein the authenticating of the obtained behavior data comprises:
obtaining speech data as the behavior data of the user, applying feature information extracted with respect to the speech data of the user to a user model and a universal background model, wherein the universal background model is a general feature distribution model of various types of music, determining whether the feature information extracted with respect to the speech data of the user is close to a pattern by the user model or a pattern by the universal background model,
determining which is greater between a value indicating that the feature information extracted with respect to the speech data is close to the the pattern by the user model or a value indicating that the feature information extracted with respect to the speech data is close to the pattern by the universal background model,
obtaining a confidence value with respect to the behavior data based on which value is greater, and
based on the confidence value, authenticating the obtained behavior data.

2. The method of claim 1, wherein the behavior data submitted to the blockchain is added to the blockchain as a new block because a consensus on the behavior data submitted to the blockchain is achieved between nodes participating in the blockchain and is enrolled in the blockchain.

3. The method of claim 1, further comprising:
when a new block is added to the blockchain, refining the authentication model based on behavior data included in the new block.

4. The method of claim 1, wherein when the confidence value is greater than or equal to a reference value, the behavior data is submitted to the blockchain.

5. The method of claim 1, wherein the authenticating of the obtained behavior data comprises:
additionally obtaining other behavior data with respect to the user when the confidence value is less than or equal to a reference value;
obtaining a confidence value with respect to the other behavior data using the authentication model; and
authenticating the obtained behavior data based on the confidence value with respect to the other behavior data.

6. The method of claim 5, wherein when the confidence value with respect to the other behavior data is greater than or equal to the reference value, the other behavior data is submitted to the blockchain.

7. An electronic device that is configured to authenticate a user, the electronic device comprising:
a memory storing an authentication model;
at least one processor configured to obtain ¹ speech data as behavior data with respect to the user, apply feature information extracted with respect to the speech data of the user to a user model and a universal background model, wherein the universal background model is a general feature distribution model of various types of music, determine whether the feature information extracted with respect to the speech data of the user is close to a pattern by the user model or a pattern by the universal background model, determine which is greater between a value indicating that the feature information extracted with respect to the speech data is close to the pattern by the user model or a value indicating that the feature information extracted with respect to the speech data is close to the pattern by the universal background model, obtain a confidence value with respect to the behavior data based on which value is greater, and authenticate the obtained behavior data based on the confidence value by using the obtained authentication model; and
a communicator configured to, based on results of the authenticating, submit the authenticated behavior data to a blockchain,
wherein the authentication model is a model trained based on at least one piece of behavior data with respect to the user enrolled in the blockchain,
wherein the authenticating of the obtained behavior data comprises continuously authenticating the obtained behavior data during one session.

8. The electronic device of claim 7, wherein the behavior data submitted to the blockchain is added to the blockchain as a new block because a consensus on the behavior data submitted to the blockchain is achieved between nodes participating in the blockchain and is enrolled in the blockchain.

9. The electronic device of claim 7, wherein the at least one processor is configured to, when a new block is added to the blockchain, refine the authentication model based on behavior data included in the new block.

10. The electronic device of claim 7, wherein when the confidence value is greater than or equal to a reference value, the behavior data is submitted to the blockchain.

11. The electronic device of claim 7, wherein the at least one processor is configured to additionally obtain other behavior data with respect to the user when the confidence value is less than or equal to a reference value; obtain a confidence value with respect to the other behavior data using the authentication model; and authenticate the obtained behavior data based on the confidence value with respect to the other behavior data.

12. The electronic device of claim 11, when the confidence value with respect to the other behavior data is greater than or equal to the reference value, the other behavior data is submitted to the blockchain.

13. A computer program product comprising a computer readable recording medium comprising a program to perform:
obtaining an authentication model;
obtaining behavior data with respect to a user;
authenticating the obtained behavior data using the obtained authentication model; and
based on results of the authenticating, submitting the authenticated behavior data to a blockchain,
wherein the authentication model is a model trained based on at least one piece of behavior data with respect to the user enrolled in the blockchain,
wherein the authenticating of the obtained behavior data comprises continuously authenticating the obtained behavior data during one session,
wherein the authenticating of the obtained behavior data comprises:
obtaining speech data as the behavior data of the user, applying feature information extracted with respect to the speech data of the user to a user model and a universal background model, wherein the universal background model is a general feature distribution model of various types of music,
determining whether the feature information extracted with respect to the speech data of the user is close to a pattern by the user model or a pattern by the universal background model,
determining which is greater between a value indicating that the feature information extracted with respect to the speech data is close to the pattern by the user model or a value indicating that the feature information extracted with respect to the speech data is close to the pattern by the universal background model,
obtaining a confidence value with respect to the behavior data based on which value is greater, and
based on the confidence value, authenticating the obtained behavior data.

## Patentansprüche

1. Verfahren, das von einer elektronischen Vorrichtung durchgeführt wird, zum Authentifizieren eines Benutzers, wobei das Verfahren Folgendes umfasst:
Erhalten eines Authentifizierungsmodells;
Erhalten von Verhaltensdaten bezüglich des Benutzers;
Authentifizieren der erhaltenen Verhaltensdaten unter Verwendung des erhaltenen Authentifizierungsmodells; und basierend auf den Ergebnissen des Authentifizierens, Übermitteln der authentifizierten Verhaltensdaten an eine Blockchain,
wobei das Authentifizierungsmodell ein Modell ist, das basierend auf mindestens einem Teil der Verhaltensdaten bezüglich des Benutzers, der in der Blockchain eingeschrieben ist, trainiert wird
wobei das Authentifizieren der erhaltenen Verhaltensdaten ein kontinuierliches Authentifizieren der erhaltenen Verhaltensdaten während einer Sitzung umfasst,
wobei das Authentifizieren der erhaltenen Verhaltensdaten Folgendes umfasst:
Erhalten von Sprachdaten als die Verhaltensdaten des Benutzers, Anwenden von Merkmalsinformationen, die bezüglich der Sprachdaten des Benutzers extrahiert wurden, auf ein Benutzermodell und ein universelles Hintergrundmodell, wobei das universelle Hintergrundmodell ein allgemeines Merkmalsverteilungsmodell verschiedener Musiktypen ist, Bestimmen, ob die Merkmalsinformationen, die bezüglich der Sprachdaten des Benutzers extrahiert wurden, nahe an einem Muster durch das Benutzermodell oder einem Muster durch das universelle Hintergrundmodell sind, Bestimmen, was größer ist zwischen einem Wert, der anzeigt, dass die bezüglich der Sprachdaten extrahierten Merkmalsinformationen nahe an dem Muster durch das Benutzermodell liegen, und einem Wert, der anzeigt, dass die bezüglich der Sprachdaten extrahierten Merkmalsinformationen nahe an dem Muster des universellen Hintergrundmodells liegen,
Erhalten eines Konfidenzwertes bezüglich der Verhaltensdaten basierend auf dem Wert, der größer ist, und,
basierend auf dem Konfidenzwert, Authentifizieren der erhaltenen Verhaltensdaten.

2. Verfahren nach Anspruch 1, wobei die an die Blockchain übermittelten Verhaltensdaten der Blockchain als ein neuer Block hinzugefügt werden, weil ein Konsens über die an die Blockchain übermittelten Verhaltensdaten zwischen den an der Blockchain teilnehmenden Knoten erreicht wird und in die Blockchain eingeschrieben wird.

3. Verfahren nach Anspruch 1, ferner umfassend:
wenn ein neuer Block zur Blockchain hinzugefügt wird, Verfeinern des Authentifizierungsmodells basierend auf Verhaltensdaten, die in dem neuen Block enthalten sind.

4. Verfahren nach Anspruch 1, wobei, wenn der Konfidenzwert größer als oder gleich einem Referenzwert ist, die Verhaltensdaten an die Blockchain übermittelt werden.

5. Verfahren nach Anspruch 1, wobei das Authentifizieren der erhaltenen Verhaltensdaten Folgendes umfasst:
zusätzliches Erhalten anderer Verhaltensdaten bezüglich des Benutzers, wenn der Konfidenzwert kleiner als oder gleich einem Referenzwert ist;
Erhalten eines Konfidenzwertes bezüglich der anderen Verhaltensdaten unter Verwendung des Authentifizierungsmodells; und
Authentifizieren der erhaltenen Verhaltensdaten basierend auf dem Konfidenzwert bezüglich der anderen Verhaltensdaten.

6. Verfahren nach Anspruch 5, wobei, wenn der Konfidenzwert bezüglich der anderen Verhaltensdaten größer als oder gleich dem Referenzwert ist, die anderen Verhaltensdaten an die Blockchain übermittelt werden.

7. Elektronische Vorrichtung, die konfiguriert ist, um einen Benutzer zu authentifizieren, wobei die elektronische Vorrichtung Folgendes umfasst:
einen Speicher, der ein Authentifizierungsmodell speichert;
mindestens einen Prozessor, der konfiguriert ist, um Sprachdaten als Verhaltensdaten bezüglich des Benutzers zu erhalten, Anwenden von Merkmalsinformationen, die bezüglich der Sprachdaten des Benutzers extrahiert wurden, auf ein Benutzermodell und ein universelles Hintergrundmodell, wobei das universelle Hintergrundmodell ein allgemeines Merkmalsverteilungsmodell verschiedener Musiktypen ist, Bestimmen, ob die Merkmalsinformationen, die bezüglich der Sprachdaten des Benutzers extrahiert wurden, nahe an einem Muster durch das Benutzermodell oder einem Muster durch das universelle Hintergrundmodell liegen, Bestimmen, was größer ist zwischen einem Wert, der anzeigt, dass die bezüglich der Sprachdaten extrahierte Merkmalsinformation nahe an dem Muster durch das Benutzermodell liegt, oder einem Wert, der anzeigt, dass die bezüglich der Sprachdaten extrahierte Merkmalsinformation nahe an dem Muster durch das universelle Hintergrundmodell liegt, Erhalten eines Konfidenzwertes bezüglich der Verhaltensdaten basierend darauf, welcher Wert größer ist, und Authentifizieren der erhaltenen Verhaltensdaten basierend auf dem Konfidenzwert durch Verwendung des erhaltenen Authentifizierungsmodells; und
einen Kommunikator, der konfiguriert ist, um basierend auf den Ergebnissen des Authentifizierens die authentifizierten Verhaltensdaten an eine Blockchain zu übermitteln,
wobei das Authentifizierungsmodell ein Modell ist, das basierend auf mindestens einem Teil der Verhaltensdaten bezüglich des in der Blockchain eingeschriebenen Benutzers trainiert wurde,
wobei das Authentifizieren der erhaltenen Verhaltensdaten ein kontinuierliches Authentifizieren der erhaltenen Verhaltensdaten während einer Sitzung umfasst.

8. Elektronische Vorrichtung nach Anspruch 7, wobei die an die Blockchain übermittelten Verhaltensdaten der Blockchain als ein neuer Block hinzugefügt werden, weil ein Konsens über die an die Blockchain übermittelten Verhaltensdaten zwischen den an der Blockchain teilnehmenden Knoten erreicht wird und in die Blockchain eingeschrieben wird.

9. Elektronische Vorrichtung nach Anspruch 7, wobei der mindestens eine Prozessor konfiguriert ist, um, wenn ein neuer Block zur Blockchain hinzugefügt wird, das Authentifizierungsmodell basierend auf Verhaltensdaten, die in dem neuen Block enthalten sind, zu verfeinern.

10. Elektronische Vorrichtung nach Anspruch 7, wobei, wenn der Konfidenzwert größer als oder gleich einem Referenzwert ist, die Verhaltensdaten an die Blockchain übermittelt werden.

11. Elektronische Vorrichtung nach Anspruch 7, wobei der mindestens eine Prozessor konfiguriert ist, um zusätzlich andere Verhaltensdaten bezüglich des Benutzers zu erhalten, wenn der Konfidenzwert kleiner als oder gleich einem Referenzwert ist; einen Konfidenzwert bezüglich der anderen Verhaltensdaten unter Verwendung des Authentifizierungsmodells zu erhalten; und die erhaltenen Verhaltensdaten basierend auf dem Konfidenzwert bezüglich der anderen Verhaltensdaten zu authentifizieren.

12. Elektronische Vorrichtung nach Anspruch 11, wobei, wenn der Konfidenzwert bezüglich der anderen Verhaltensdaten größer als oder gleich dem Referenzwert ist, die anderen Verhaltensdaten an die Blockchain übermittelt werden.

13. Computerprogrammprodukt, umfassend ein computerlesbares Aufzeichnungsmedium, umfassend ein Programm, um Folgendes durchzuführen:
Erhalten eines Authentifizierungsmodells;
Erhalten von Verhaltensdaten bezüglich eines Benutzers;
Authentifizieren der erhaltenen Verhaltensdaten unter Verwendung des erhaltenen Authentifizierungsmodells; und basierend auf den Ergebnissen des Authentifizierens, Übermitteln der authentifizierten Verhaltensdaten an eine Blockchain,
wobei das Authentifizierungsmodell ein Modell ist, das basierend auf mindestens einem Teil der Verhaltensdaten bezüglich des in der Blockchain eingeschriebenen Benutzers trainiert wurde,
wobei das Authentifizieren der erhaltenen Verhaltensdaten ein kontinuierliches Authentifizieren der erhaltenen Verhaltensdaten während einer Sitzung umfasst,
wobei das Authentifizieren der erhaltenen Verhaltensdaten Folgendes umfasst:
Erhalten von Sprachdaten als die Verhaltensdaten des Benutzers, Anwenden von Merkmalsinformationen, die bezüglich der Sprachdaten des Benutzers extrahiert wurden, auf ein Benutzermodell und ein universelles Hintergrundmodell, wobei das universelle Hintergrundmodell ein allgemeines Merkmalsverteilungsmodell verschiedener Musiktypen ist, Bestimmen, ob die Merkmalsinformationen, die bezüglich der Sprachdaten des Benutzers extrahiert wurden, nahe an einem Muster durch das Benutzermodell oder einem Muster durch das universelle Hintergrundmodell sind, Bestimmen, was größer ist zwischen einem Wert, der anzeigt, dass die bezüglich der Sprachdaten extrahierten Merkmalsinformationen nahe an dem Muster durch das Benutzermodell liegen, und einem Wert, der anzeigt, dass die bezüglich der Sprachdaten extrahierten Merkmalsinformationen nahe an dem Muster des universellen Hintergrundmodells liegen, Erhalten eines Konfidenzwertes bezüglich der Verhaltensdaten basierend auf dem Wert, der größer ist, und,
basierend auf dem Konfidenzwert, Authentifizieren der erhaltenen Verhaltensdaten.

## Revendications

1. Procédé, exécuté par un dispositif électronique, d'authentification d'un utilisateur, le procédé comprenant :
l'obtention d'un modèle d'authentification ;
l'obtention de données de comportement par rapport à l'utilisateur ;
l'authentification des données de comportement obtenues à l'aide du modèle d'authentification obtenu ; et
sur la base de résultats de l'authentification, la soumission des données de comportement authentifiées à une chaîne de blocs,
dans lequel le modèle d'authentification est un modèle entraîné sur la base d'au moins un élément de données de comportement par rapport à l'utilisateur inscrit dans la chaîne de blocs
dans lequel l'authentification des données de comportement obtenues comprend l'authentification continue des données de comportement obtenues au cours d'une session,
dans lequel l'authentification des données de comportement obtenues comprend :
l'obtention de données vocales en tant que données de comportement de l'utilisateur, l'application d'informations de caractéristiques extraites par rapport aux données vocales de l'utilisateur à un modèle utilisateur et à un modèle d'arrière-plan universel, dans lequel le modèle d'arrière-plan universel est un modèle général de distribution de caractéristiques de divers types de musique, le fait de déterminer si les informations de caractéristiques extraites par rapport aux données vocales de l'utilisateur sont proches d'un schéma par le modèle utilisateur ou d'un schéma par le modèle d'arrière-plan universel, le fait de déterminer quelle est la plus grande valeur entre une valeur indiquant que les informations de caractéristiques extraites par rapport aux données vocales sont proches du schéma par le modèle utilisateur ou une valeur indiquant que les informations de caractéristiques extraites par rapport aux données vocales sont proches du schéma par le modèle d'arrière-plan universel,
l'obtention d'une valeur de confiance par rapport aux données de comportement sur la base de la valeur la plus grande, et
sur la base de la valeur de confiance, l'authentification des données de comportement obtenues.

2. Procédé selon la revendication 1, dans lequel les données de comportement soumises à la chaîne de blocs sont ajoutées à la chaîne de blocs en tant que nouveau bloc car un consensus sur les données de comportement soumises à la chaîne de blocs est atteint entre des noeuds participant à la chaîne de blocs et est inscrit dans la chaîne de blocs.

3. Procédé selon la revendication 1, comprenant en outre :
lorsqu'un nouveau bloc est ajouté à la chaîne de blocs, l'affinage du modèle d'authentification sur la base de données de comportement incluses dans le nouveau bloc.

4. Procédé selon la revendication 1, dans lequel lorsque la valeur de confiance est supérieure ou égale à une valeur de référence, les données de comportement sont soumises à la chaîne de blocs.

5. Procédé selon la revendication 1, dans lequel l'authentification des données de comportement obtenues comprend :
l'obtention par ailleurs d'autres données de comportement par rapport à l'utilisateur lorsque la valeur de confiance est inférieure ou égale à une valeur de référence ;
l'obtention d'une valeur de confiance par rapport aux autres données de comportement à l'aide du modèle d'authentification ; et
l'authentification des données de comportement obtenues sur la base de la valeur de confiance par rapport aux autres données de comportement.

6. Procédé selon la revendication 5, dans lequel lorsque la valeur de confiance par rapport aux autres données de comportement est supérieure ou égale à la valeur de référence, les autres données de comportement sont soumises à la chaîne de blocs.

7. Dispositif électronique qui est configuré pour authentifier un utilisateur, le dispositif électronique comprenant :
une mémoire stockant un modèle d'authentification ;
au moins un processeur configuré pour obtenir des données vocales en tant que données de comportement par rapport à l'utilisateur, appliquer des informations de caractéristiques extraites par rapport aux données vocales de l'utilisateur à un modèle utilisateur et à un modèle d'arrière-plan universel, dans lequel le modèle d'arrière-plan universel est un modèle général de distribution de caractéristiques de divers types de musique, déterminer si les informations de caractéristiques extraites par rapport aux données vocales de l'utilisateur sont proches d'un schéma par le modèle utilisateur ou d'un schéma par le modèle d'arrière-plan universel, déterminer quelle est la plus grande valeur entre une valeur indiquant que les informations de caractéristiques extraites par rapport aux données vocales sont proches du schéma par le modèle utilisateur ou une valeur indiquant que les informations de caractéristiques extraites par rapport aux données vocales sont proches du schéma par le modèle d'arrière-plan universel, obtenir une valeur de confiance par rapport aux données de comportement sur la base de la valeur la plus grande, et authentifier les données de comportement obtenues sur la base de la valeur de confiance à l'aide du modèle d'authentification obtenu ; et
un communicateur configuré pour, sur la base de résultats de l'authentification, soumettre les données de comportement authentifiées à une chaîne de blocs,
dans lequel le modèle d'authentification est un modèle entraîné sur la base d'au moins un élément de données de comportement par rapport à l'utilisateur inscrit dans la chaîne de blocs,
dans lequel l'authentification des données de comportement obtenues comprend l'authentification continue des données de comportement obtenues au cours d'une session.

8. Dispositif électronique selon la revendication 7, dans lequel les données de comportement soumises à la chaîne de blocs sont ajoutées à la chaîne de blocs en tant que nouveau bloc car un consensus sur les données de comportement soumises à la chaîne de blocs est atteint entre des noeuds participant à la chaîne de blocs et est inscrit dans la chaîne de blocs.

9. Dispositif électronique selon la revendication 7, dans lequel l'au moins un processeur est configuré pour, lorsqu'un nouveau bloc est ajouté à la chaîne de blocs, affiner le modèle d'authentification sur la base de données de comportement incluses dans le nouveau bloc.

10. Dispositif électronique selon la revendication 7, dans lequel lorsque la valeur de confiance est supérieure ou égale à une valeur de référence, les données de comportement sont soumises à la chaîne de blocs.

11. Dispositif électronique selon la revendication 7, dans lequel l'au moins un processeur est configuré pour obtenir en plus d'autres données de comportement par rapport à l'utilisateur lorsque la valeur de confiance est inférieure ou égale à une valeur de référence ; obtenir une valeur de confiance par rapport aux autres données de comportement à l'aide du modèle d'authentification ; et authentifier les données de comportement obtenues sur la base de la valeur de confiance par rapport aux autres données de comportement.

12. Dispositif électronique selon la revendication 11, lorsque la valeur de confiance par rapport aux autres données de comportement est supérieure ou égale à la valeur de référence, les autres données de comportement sont soumises à la chaîne de blocs.

13. Produit de programme informatique comprenant un support d'enregistrement lisible par ordinateur comprenant un programme pour exécuter :
l'obtention d'un modèle d'authentification ;
l'obtention de données de comportement par rapport à un utilisateur ;
l'authentification des données de comportement obtenues à l'aide du modèle d'authentification obtenu ; et
sur la base de résultats de l'authentification, la soumission des données de comportement authentifiées à une chaîne de blocs,
dans lequel le modèle d'authentification est un modèle entraîné sur la base d'au moins un élément de données de comportement par rapport à l'utilisateur inscrit dans la chaîne de blocs,
dans lequel l'authentification des données de comportement obtenues comprend l'authentification continue des données de comportement obtenues au cours d'une session,
dans lequel l'authentification des données de comportement obtenues comprend :
l'obtention de données vocales en tant que données de comportement de l'utilisateur, l'application d'informations de caractéristiques extraites par rapport aux données vocales de l'utilisateur à un modèle utilisateur et à un modèle d'arrière-plan universel, dans lequel le modèle d'arrière-plan universel est un modèle général de distribution de caractéristiques de divers types de musique, le fait de déterminer si les informations de caractéristiques extraites par rapport aux données vocales de l'utilisateur sont proches d'un schéma par le modèle utilisateur ou d'un schéma par le modèle d'arrière-plan universel, le fait de déterminer quelle est la plus grande valeur entre une valeur indiquant que les informations de caractéristiques extraites par rapport aux données vocales sont proches du schéma par le modèle utilisateur ou une valeur indiquant que les informations de caractéristiques extraites par rapport aux données vocales sont proches du schéma par le modèle d'arrière-plan universel, l'obtention d'une valeur de confiance par rapport aux données de comportement sur la base de la valeur la plus grande, et
sur la base de la valeur de confiance, l'authentification des données de comportement obtenues.
